(19)

Europäisches
Patentamt
European
Patent Office
Office européen
des brevets

(11) **EP 4 134 871 A1**

(12) **EUROPEAN PATENT APPLICATION**

(43) Date of publication:
**15.02.2023 Bulletin 2023/07**

(51) International Patent Classification (IPC):
**G06N 3/04** *(2000.01)* **G06N 3/08** *(2000.01)*

(21) Application number: **21191394.2**

(52) Cooperative Patent Classification (CPC):
**G06N 3/08; G06N 3/045; G06N 3/047**

(22) Date of filing: **13.08.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Microsoft Technology Licensing, LLC
Redmond, WA 98052-6399 (US)**

(72) Inventors:
• **ZHANG, Cheng
Washington, 98052-6399 (US)**
• **MA, Chao
Washington, 98052-6399 (US)**

(74) Representative: **Townsend, Martyn
Page White & Farrer Limited
Bedford House
21A John Street
London WC1N 2BF (GB)**

(54) **IDENTIFIABLE GENERATIVE MODELS FOR MISSING NOT AT RANDOM DATA IMPUTATION**

(57) A computer-implemented method comprising: tuning first, second and third set of parameters of respective neural networks by minimising a loss function, the loss function comprising a sum of: a measure of difference between a distribution of a first plurality of latent vectors and a distribution of a second plurality of latent vectors; and an error determined based on a set of computed vectors, a set of computed mask vectors and ground truth data for the set of data.

<u>Figure 8</u>

**Description**

Background

Neural networks are used in the field of machine learning and artificial intelligence (AI). A neural network comprises a plurality of nodes which are interconnected by links, sometimes referred to as edges. The input edges of one or more nodes form the input of the network as a whole, and the output edges of one or more other nodes form the output of the network as a whole, whilst the output edges of various nodes within the network form the input edges to other nodes. Each node represents a function of its input edge(s) weighted by a respective weight; the result being output on its output edge(s). The weights can be gradually tuned based on a set of experience data (e.g. training data) to tend towards a state where the output of the network will output a desired value for a given input.

Typically, the nodes are arranged into layers with at least an input and an output layer. A "deep" neural network comprises one or more intermediate or "hidden" layers in between the input layer and the output layer. The neural network can take input data and propagate the input data through the layers of the network to generate output data. Certain nodes within the network perform operations on the data, and the result of those operations is passed to other nodes, and so on.

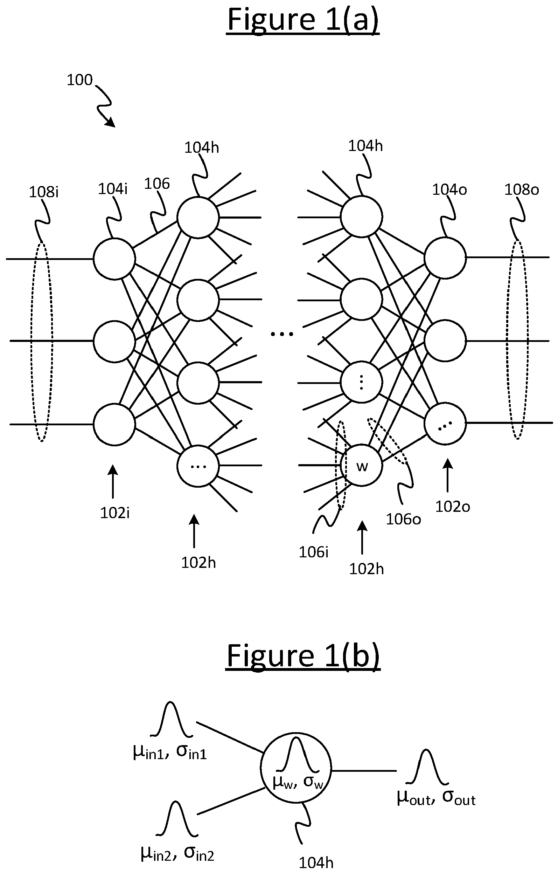

Figure 1(a) gives a simplified representation of an example neural network 108. The example neural network comprises multiple layers of nodes 104: an input layer 102i, one or more hidden layers 102h and an output layer 102o. In practice, there may be many nodes in each layer, but for simplicity only a few are illustrated. Each node is configured to generate an output by carrying out a function on the values input to that node. The inputs to one or more nodes form the input of the neural network, the outputs of some nodes form the inputs to other nodes, and the outputs of one or more nodes form the output of the network.

At some or all the nodes of the network, the input to that node is weighted by a respective weight. A weight may define the connectivity between a node in a given layer and the nodes in the next layer of the neural network. A weight can take the form of a scalar or a probabilistic distribution. When the weights are defined by a distribution, as in a Bayesian model, the neural network can be fully probabilistic and captures the concept of uncertainty. The values of the connections 106 between nodes may also be modelled as distributions. This is illustrated schematically in Figure 1(b). The distributions may be represented in the form of a set of samples or a set of parameters parameterizing the distribution (e.g. the mean $\mu$ and standard deviation $\sigma$ or variance $\sigma^2$).

The network learns by operating on data input at the input layer, and, based on the input data, adjusting the weights applied by some or all of the nodes in the network. There are different learning approaches, but in general there is a forward propagation through the network from left to right in Figure 1(a), a calculation of an overall error, and a backward propagation of the error through the network from right to left in Figure 1(a). In the next cycle, each node takes into account the back propagated error and produces a revised set of weights. In this way, the network can be trained to perform its desired operation.

The input to the network is typically a vector, each element of the vector representing a different corresponding feature. E.g. in the case of image recognition the elements of this feature vector may represent different pixel values, or in a medical application the different features may represent different symptoms. The output of the network may be a scalar or a vector. The output may represent a classification, e.g. an indication of whether a certain object such as an elephant is recognized in the image, or a diagnosis of the patient in the medical example.

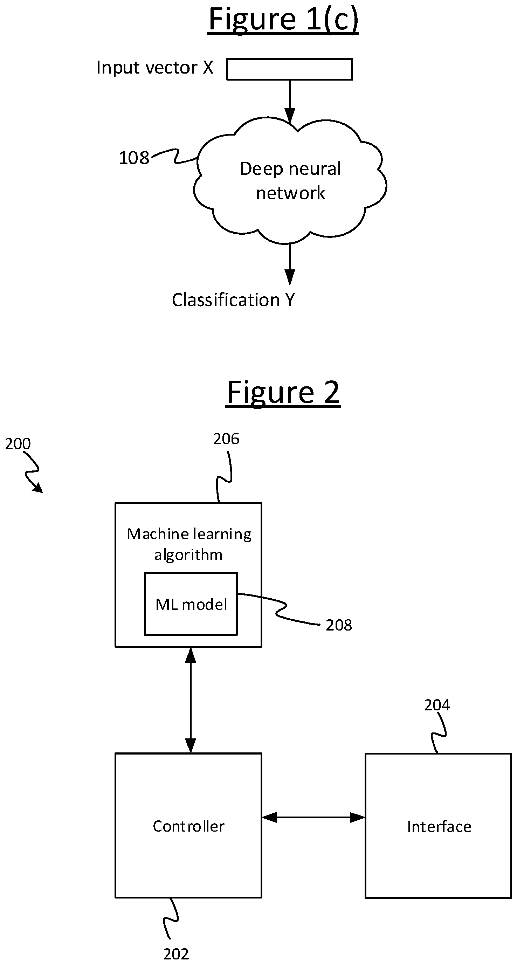

Figure 1(c) shows a simple arrangement in which a neural network is arranged to predict a classification based on an input feature vector. During a training phase, experience data comprising a large number of input data points is supplied to the neural network, each data point comprising an example set of values for the feature vector, labelled with a respective corresponding value of the classification (e.g. elephant or not elephant). Over many such example data points, the learning algorithm tunes the weights to reduce the overall error in the network. Once trained with a suitable number of data points, a target feature vector can then be input to the neural network without a label, and the network can instead predict the value of the classification based on the input feature values and the tuned weights.

Training in this manner is sometimes referred to as a supervised approach. Other approaches are also possible, such as a reinforcement approach wherein the network each data point is not initially labelled. The learning algorithm begins by guessing the corresponding output for each point, and is then told whether it was correct, gradually tuning the weights with each such piece of feedback. Another example is an unsupervised approach where input data points are not labelled at all and the learning algorithm is instead left to infer its own structure in the experience data.

Summary

The present disclosure recognizes that together with background knowledge and an observed part of a data set, missing values in the data set can be predicted by machine learning methods This can be used to predict why certain values are missing in a data set, which provides a more accurate system for determining missing values in data sets input into the system by reducing bias introduced into a system by relationships between missing variables. This allows the system to predict missing values for input data where the data is missing not at random.

According to one aspect disclosed herein, there is provided a computer-implemented method of machine learning. The method comprises receiving values of a plurality of features for each data point in a set of data, the set of data comprising at least one missing value of a feature for at least one data point. A first neural network having a first set of parameters is used to encode the set of data into a first plurality of latent vectors. A second neural network having a second set of parameters is used to decode the plurality of latent vectors into a computed vector for each data point. The method comprises inputting the computed vector for each data point into a third neural network having a third set of parameters to determine a computed set of mask vectors comprising a computed mask vector for each data point, wherein each computed mask vector comprises a computed binary value for each feature to indicate whether a value for each feature is missing or not. The method also comprises using a fourth neural network having a fourth set of parameters to encode background data for each data point into a second plurality of latent vectors. To optimise the first, second and third set of parameters, which in some examples can be used in future to impute missing data values in other data sets, the method comprises tuning the first, second and third set of parameters by minimising a loss function, the loss function comprising a sum of: a measure of difference between the first plurality of latent vectors and the second plurality of latent vectors; and an error determined based on the set of computed vectors, the set of computed mask vectors and ground truth data for the set of data.

In some examples, the values of the variables of the input vector may not be fully observed, because the values for certain features are not observed. This is common in real world scenarios where a value may not be obtained for each variable of an input vector. All missing data problems fall into one of the following three categories: Missing Completely At Random (MCAR), Missing At Random (MAR), and Missing Not At Random (MNAR). Data are MCAR if the cause of missingness is purely random, e.g., some entries are deleted due to a random computer error. Data are MAR when the direct cause of missingness is fully observed. For example, a dataset consists of two variables: gender and income, where gender is always observed and income has missing entries. MAR missingness would occur when men are more reluctant than women to disclose their income (i.e., gender causes missingness). Data that are neither MAR nor MCAR fall under the MNAR category. In the example above, MNAR would occur when gender also has missing entries. MNAR is the most common case and most challenging to solve technically. Our solution can handle all these different missingness patterns.

Brief Description of the Drawings

To assist understanding of embodiments of the present disclosure and to illustrate how such embodiments may be put into effect, reference is made, my way of example only, to the accompanying drawings in which:

Figure 1(a) is a schematic illustration of a neural network;

Figure 1(b) is a schematic illustration of a neural network arranged to predict a classification based on an input feature vector;

Figure 1(c) is a schematic illustration of a node of a Bayesian neural network;

Figure 2 is a schematic illustration of a computing apparatus for implementing a neural network;

Figure 3 schematically illustrates a data set comprising a plurality of data points each comprising one or more feature values;

Figure 4 is a schematic illustration of a variational auto encoder (VAE);

Figure 5 schematically shows an example of different missingness mechanisms of data sets;

Figure 6 shows an example of data that may be received in a data set;

Figure 7 shows an example of a system that may be used to impute values in data;

Figure 8 shows an example of a system that may be used to train a system that can be used to impute data;

Figure 9 shows an example of a system that may be used to impute values in data;

Figure 10 shows a graph of results;

Figure 11 shows a graph of results; and

Figure 12 shows a flow chart of a method.

Detailed Description of Embodiments

The following will present a method of machine learning. The method tunes weights of neural networks in a system based on training data. The tuned neural networks can be used to impute missing values in input data sets. Some examples take into account a Missing Not At Random (MNAR) relationship between recorded values to improve accuracy of missing value imputation when data are MNAR.

First however there is described an example system in which the presently disclosed techniques may be implemented. There is also provided an overview of the principles behind neural networks and variational auto encoders, based upon which embodiments may be built or expanded.

Figure 2 illustrates an example computing apparatus 200 for implementing an artificial intelligence (AI) algorithm including a machine-learning model in accordance with embodiments described herein. The computing apparatus 200 may take the form of a user terminal such as a desktop computer, laptop computer, tablet, smartphone, wearable smart device such as a smart watch, an on-board computer of a vehicle such as car, or a managing computing system for a set of sensors etc. Additionally or alternatively, the computing apparatus 200 may comprise a server. A server herein refers to a logical entity which may comprise one or more physical server units located at one or more geographic sites. Where required, distributed or "cloud" computing techniques are in themselves known in the art. The one or more user terminals and/or the one or more server units of the server may be connected to one another via a packet-switched network, which may comprise for example a wide-area internetwork such as the Internet, a mobile cellular network such as a 3GPP network, a wired local area network (LAN) such as an Ethernet network, or a wireless LAN such as a Wi-Fi, Thread or 6LoWPAN network.

The computing apparatus 200 comprises at least a controller 202, an interface (e.g., a user interface) 204, and an artificial intelligence (AI) algorithm 206. The controller 202 is operatively coupled to each of the interface 204 and the AI algorithm 206.

Each of the controller 202, interface 204 and AI algorithm 206 may be implemented in the form of software code embodied on computer readable storage and run on processing apparatus comprising one or more processors such as CPUs, work accelerator co-processors such as GPUs, and/or other application specific processors, implemented on one or more computer terminals or units at one or more geographic sites. The storage on which the code is stored may comprise one or more memory devices employing one or more memory media (e.g. electronic or magnetic media), again implemented on one or more computer terminals or units at one or more geographic sites. In embodiments, one, some or all the controller 202, interface 204 and AI algorithm 206 may be implemented on the server. Alternatively, a respective instance of one, some or all of these components may be implemented in part or even wholly on each of one, some or all of the one or more user terminals. In further examples, the functionality of the above-mentioned components may be split between any combination of the user terminals and the server. Again, it is noted that, where required, distributed computing techniques are in themselves known in the art. It is also not excluded that one or more of these components may be implemented in dedicated hardware.

The controller 202 comprises a control function for coordinating the functionality of the interface 204 and the AI algorithm 206. The interface 204 refers to the functionality for receiving and/or outputting data. The interface 204 may comprise a user interface (UI) for receiving and/or outputting data to and/or from one or more users, respectively; or it may comprise an interface to a UI on another, external device. Alternatively, the interface may be arranged to collect data from and/or output data to an automated function implemented on the same apparatus or an external device. In the case of an external device, the interface 204 may comprise a wired or wireless interface for communicating, via a wired or wireless connection respectively, with the external device. The interface 204 may comprise one or more constituent types of interface, such as voice interface, and/or a graphical user interface. The interface 204 may present a UI front end to the user(s) through one or more I/O modules on their respective user device(s), e.g., speaker and microphone, touch screen, etc., depending on the type of user interface. The logic of the interface may be implemented on a server and output to the user through the I/O module(s) on his/her user device(s). Alternatively, some or all of the logic of the interface 204 may also be implemented on the user device(s) 102 its/themselves.

The controller 202 is configured to control the AI algorithm 206 to perform operations in accordance with the embodiments described herein. It will be understood that any of the operations disclosed herein may be performed by the AI algorithm 206, under control of the controller 202 to collect experience data from the user and/or an automated process via the interface 204, pass it to the AI algorithm 206, receive predictions back from the AI algorithm and output the predictions to the user and/or automated process through the interface 204.

The AI algorithm 206 comprises a machine-learning model 208, comprising one or more constituent statistical models such as one or more neural networks.

Figure 1(a) illustrates the principle behind a neural network. A neural network 100 comprises a graph of interconnected nodes 104 and edges 106 connecting between nodes, all implemented in software. Each node 104 has one or more input edges and one or more output edges. The input edges of one or more of the nodes 104 form the overall input 108i to the graph (typically an input vector, i.e., there are multiple input edges). The output edges of one or more of the nodes 104 form the overall output 108o of the graph (which may be an output vector in the case where there are multiple output edges). Further, the output edges of at least some of the nodes 104 form the input edges of at least some others of the nodes 104.

Each node 104 represents a function of the input value(s) received on its input edges(s) 106i, the outputs of the function being output on the output edge(s) 106o of the respective node 104, such that the value(s) output on the output edge(s) 106o of the node 104 depend on the respective input value(s) according to the respective function. The function of each node 104 is also parametrized by one or more respective parameters w, sometimes also referred to as weights (not necessarily weights in the sense of multiplicative weights, though that is certainly one possibility). Thus, the relation between the values of the input(s) 106i and the output(s) 106o of each node 104 depends on the respective function of the node and its respective weight(s).

Each weight could simply be a scalar value. Alternatively, as shown in Figure 1(b), at some or all of the nodes 104 in the network 100, the respective weight may be modelled as a probabilistic distribution such as a Gaussian. In such cases the neural network 100 is sometimes referred to as a Bayesian neural network. Optionally, the value input/output on each of some or all of the edges 106 may each also be modelled as a respective probabilistic distribution. For any given weight or edge, the distribution may be modelled in terms of a set of samples of the distribution, or a set of parameters parameterizing the respective distribution, e.g., a pair of parameters specifying its centre point and width (e.g. in terms of its mean $\mu$ and standard deviation $\sigma$ or variance $\sigma^2$).

As shown in Figure 1(a), the nodes 104 of the neural network 100 may be arranged into a plurality of layers, each layer comprising one or more nodes 104. In a so-called "deep" neural network, the neural network 100 comprises an input layer 102i comprising one or more input nodes 104i, one or more hidden layers 102h (also referred to as inner layers) each comprising one or more hidden nodes 104h (or inner nodes), and an output layer 102o comprising one or more output nodes 104o. For simplicity, only two hidden layers 102h are shown in Figure 1(a), but many more may be present.

The different weights of the various nodes 104 in the neural network 100 can be gradually tuned based on a set of experience data (e.g., training data), so as to tend towards a state where the output 108o of the network will produce a desired value for a given input 108i. For instance, before being used in an actual application, the neural network 100 may first be trained for that application. Training comprises inputting experience data in the form of training data to the inputs 108i of the graph and then tuning the weights w of the nodes 104 based on feedback from the output(s) 108o of the graph. The training data comprises multiple different input data points, each comprising a value or vector of values corresponding to the input edge or edges 108i of the graph 100. In some examples, training data may comprise a set of ground truth data. In some examples, the training data may comprise ground truth data with some of the data removed.

For instance, consider a simple example as in Figure 1(c) where the machine-learning model comprises a single neural network 100, arranged to take a feature vector X as its input 108i and to output a classification Y as its output 108o. The input feature vector X comprises a plurality of elements $x_d$, each representing a different feature d = 0, 1, 2, ... etc. E.g., in the example of image recognition, each element of the feature vector X may represent a respective pixel value. For instance, one element represents the red channel for pixel (0,0); another element represents the green channel for pixel (0,0); another element represents the blue channel of pixel (0,0); another element represents the red channel of pixel (0,1); and so forth. As another example, where the neural network is used to make a medical diagnosis, each of the elements of the feature vector may represent a value of a different symptom of the subject, or physical feature of the subject or other fact about the subject (e.g. body temperature, blood pressure, etc.).

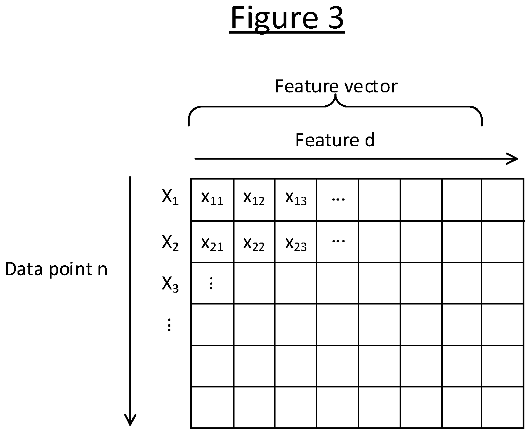

Figure 3 shows an example data set comprising a plurality of data points n = 0, 1, 2, ... etc. Each data point n comprises a respective set of values of the feature vector (where $x_{nd}$ is the value of the $d_{th}$ feature in the $n_{th}$ data point). The input feature vector $X_n$ represents the input observations for a given data point, where in general any given observation i may or may not comprise a complete set of values for all the elements of the feature vector X.

Once trained, the neural network 100 can then be used to infer a value of the output 108o for a given value of the input vector 108i (X), or vice versa.

Explicit training based on labelled training data is sometimes referred to as a supervised approach. Other approaches to machine learning are also possible. After making the prediction for each data point n (or at least some of them), the AI algorithm 206 receives feedback (e.g., from a human) as to whether the prediction was correct, and uses this to tune the weights so as to perform better next time. Another example is referred to as the unsupervised approach. In this case the AI algorithm receives no labelling or feedback and instead is left to infer its own structure in the experienced input data.

Figure 1A is a simple example of the use of a neural network 100. In some cases, the machine-learning model 208 may comprise a structure of two or more constituent neural networks 100.

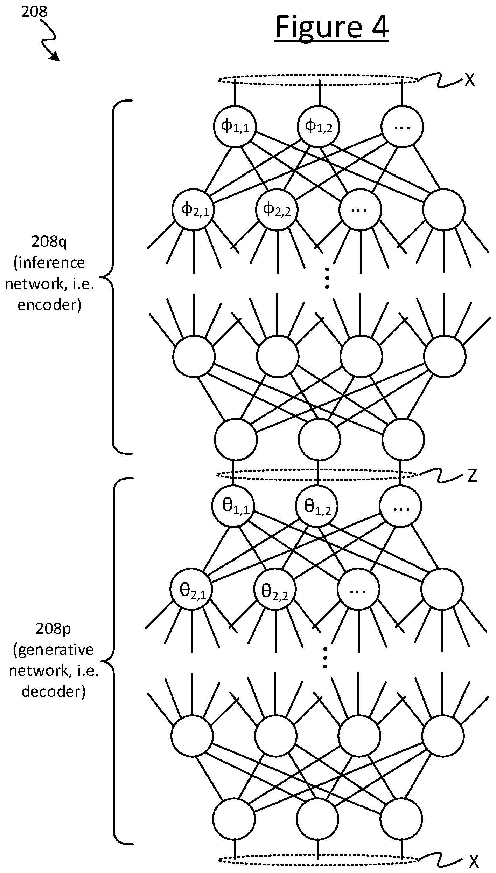

Figure 4 schematically illustrates one such example, known as a variational auto encoder (VAE). In this case the machine learning model 208 comprises an encoder 208q comprising at least one inference network, and a decoder 208p comprising one or more generative networks. Figure 4 is shown to give context of how a latent vector may be determined. Each of the inference networks and the generative networks is an instance of a neural network 100, such as discussed in relation to Figure 1(a). An inference network for the present purposes means a neural network arranged to encode an input into a latent representation of that input, and a generative network means a network arranged to at least partially decode from a latent representation.

The one or more inference networks are arranged to receive the observed feature vector X as an input and encode it into a latent vector Z (a representation in a latent space). The one or more generative networks 208p are arranged to receive the latent vector Z and decode back to the original feature space X.

The latent vector Z is a compressed (i.e. encoded) representation of the information contained in the input observations X. In a VAE, no one element of the latent vector Z necessarily represents directly any real world quantity, but the vector Z as a whole represents the information in the input data in compressed form. In some examples, Z may be a probabilistic random vector. The encoder/inference network of a VAE is in some examples parameterized to encode the observed feature X into the statistics of Z (i.e., mean and variance). For example, the encoder can be represented by $q_\Phi(Z|X)$, where $q_\Phi(Z|X)$ is usually a Gaussian distribution, whose mean and variances is determined by a neural network with X as input. It could be considered conceptually to represent abstract features abstracted from the input data X, such as "wrinklyness of skin" and "trunk-like-ness" in the example of elephant recognition (though no one element of the latent vector can necessarily be mapped onto any one such factor, and rather the latent vector Z as a whole encodes such abstract information). The decoder 404 is arranged to decode the latent vector Z back into values in a real-world feature space, i.e., back to an uncompressed form representing the actual observed properties (e.g. pixel values).

The weights w of the one or more inference networks 208q are labelled herein $\phi$, whilst the weights w of the one or more generative networks 208p are labelled $\theta$. Each node 104 applies its own respective weight as illustrated in Figure 3, but elsewhere herein the label $\phi$ generally may be used to refer to a vector of weights in one or more of the inference networks 208q, and $\theta$ to refer to a vector of weights in one or more of the generative networks 208p.

When using a VAE, with each data point in the training data (or more generally each data point in the experience data during learning), the weights $\phi$ and $\theta$ are tuned so that the VAE 208 learns to encode the feature vector X into the latent space Z and back again. For instance, this may be done by minimizing a measure of divergence between $q_\Phi(Z_n|X_n)$ and $p(Z_n)$, where $q_\phi(X_n|Z_n)$ is a distribution parameterised by $\phi$ representing a vector of the probabilistic distributions of the elements of $Z_n$ output by the encoder 208q given the input values of $X_n$ (the approximate posterior), whilst $p_\theta(Z_n)$ is a prior distribution . The prior distribution may be a known distribution. The symbol "|" means "given". The model is trained to reconstruct $X_n$ and therefore maintains a distribution over $X_n$. At the "input side", the value of $X_n$ is known, and at the "output side", the likelihood of $X_n$ under the output distribution of the model is evaluated. The input values of X are sampled from the input data distribution. The goal in a VAE of the algorithm 206 is to make p(X) close to the input data distribution. p(X, Z) may be referred to as the model of the decoder, whilst p(Z|X) may be referred to as the posterior or exact posterior, and q(Z|X) as the approximate posterior. p(z) and q(z) may be referred to as priors. Examples discussed further below may comprise similar steps to those used in a VAE, but with further modifications.

To make p(X) close to the input data distribution, this may be done by minimizing the Kullback-Leibler (KL) divergence between $q_\phi(Z_n|X_n)$ and $p_\theta(X_n|Z_n)$. The minimization may be performed using an optimization function such as an ELBO (evidence lower bound) function, which uses cost function minimization based on gradient descent. However, in general other metrics and functions are also known in the art for tuning the encoder and decoder neural networks of a VAE.

The requirement to learn to encode to Z and back again amounts to a constraint placed on the overall neural network 208 of the VAE formed from the constituent neural networks 208q, 208p. This is the general principle of an autoencoder. The purpose of forcing the autoencoder to learn to encode and then decode a compressed form of the data, is that this can achieve one or more advantages in the learning compared to a generic neural network; such as learning to ignore noise in the input data, making better generalizations, or because when far away from a solution the compressed form gives better gradient information about how to quickly converge to a solution. In a variational autoencoder, the latent vector Z is subject to an additional constraint that it follows a predetermined form (type) of probabilistic distribution such as a multidimensional Gaussian distribution or gamma distribution.

Nonetheless, an issue with existing machine learning models is that data for one or more features (variables) d for one or more data points n may be missing. Existing machine learning models that perform missing data imputation may not handle MNAR data accurately.

Missing data is an obstacle in many data analysis problems, which may compromise the performance of machine learning models, as well as downstream tasks based on these models. Being able to successfully recover/impute missing data in an unbiased way is useful to understanding the structure of real-world data. In some examples, this is performed by identifying the underlying data-generating process. Further, in some examples this is performed by identifying probabilistic mechanism that decides which data is missing.

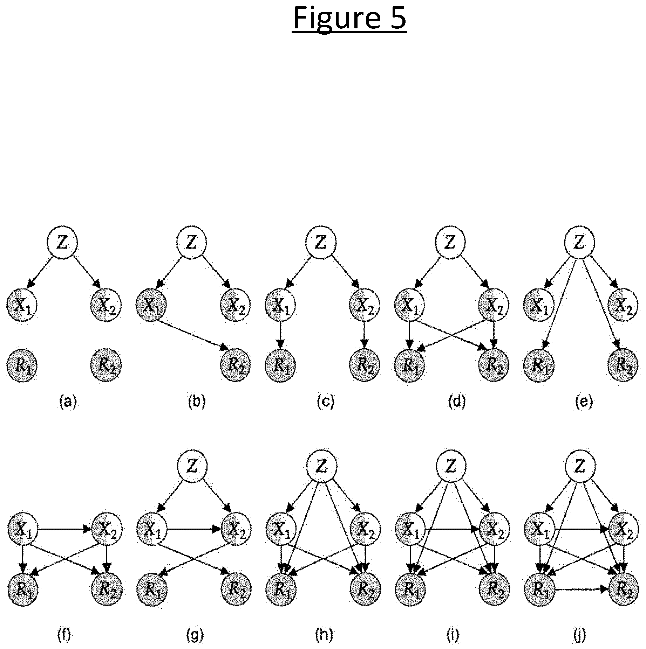

In general, there are three types of missing mechanisms. The first type is missing completely at random (MCAR), where the probability of a data entry being missing is independent of both the observed and unobserved data. See for example, Figure 5(a). In this case, no statistical bias is introduced by MCAR.

The second type of missing mechanism is missing at random (MAR), which assumes that the missing data mechanism is independent of the value of unobserved data. See for example, Figure 5 (b). Under this assumption, maximum likelihood learning methods without explicit modelling of the missingness mechanism can be applied by marginalizing out the missing variables.

However, both MCAR and MAR do not hold in many real-world applications, such as recommender systems, healthcare, and surveys. For example, in a survey, participants with financial difficulties are more likely to refuse to complete the survey about financial incomes. This is an example of missing not at random (MNAR), where the cause of the missingness (financial income) can be unobserved. In this case, ignoring the missingness mechanism will result in biased imputation, which will jeopardize down-stream tasks.

Other types of data may comprise MNAR data. For example, in a healthcare scenario, the likelihood of having a blood oxygen level recorded for a patient may increase when the patient also has a blood pressure level recorded, because both measurements may be taken at the same time during a period when a patient is ill.

Sensor data for a system of sensors may also comprise MNAR data. For example, if a certain data point is missing sensor data from one sensor, the likelihood of another sensor missing data may be increased, because for example a power outage to part or whole of the set of sensors may have caused the sensors not to record data.

In examples, a mask vector $R_n$ is provided for each data point n (where the subscript n is used to denote the number of a specific data point). In total, there may be N data points. Further, subscript d may be used to denote a specific feature. There may be a total of D features. Therefore, $x_n$ may denote a value or vector for a specific data point. A value for $x_{n,d}$ comprises a value for a specific feature vector d for a specific data point n. A mask vector $R_n$ may be provided for each data point. The mask vector $R_n$ comprises a binary value for each feature d to indicate whether a value for each feature d is missing or not. So for example, a mask vector $R_n = (0, 1, 0, 1)$ may indicate that there are for missing values for the first and third features and observed values for the second and fourth features for data point n.

Figure 5 shows examples of different kind of missing mechanisms between one or more latent variables Z, vectors $X_1$ and $X_2$, and mask vectors $R_1$ and $R_2$. Although there is only one latent variable Z shown, it should be understood that there may be more or fewer (there may in some examples be no latent vector as shown in example (f)). Further, it should be understood that although there are only two vectors $X_1$ and $X_2$ shown, there may be more or fewer vectors $X_n$. Further, it should be understood that although there are only two mask vectors $R_1$ and $R_2$ shown, there may be more or fewer mask vectors $R_n$. Arrows represent a relationship between variables.

In example (a), the data is MCAR, as there are only relationships between: Z and $X_1$; and Z and $X_2$.

In example (b), the data is MAR, as there are relationships between: Z and $X_1$; Z and $X_2$; and $X_1$ and $R_2$.

In example (c), the data is MNAR, as there are relationships between: Z and $X_1$; Z and $X_2$; $X_1$ and $R_1$; and $X_2$ and $R_2$.

In example (d), the data is MNAR, as there are relationships between Z and $X_1$; Z and $X_2$; $X_1$ and $R_1$; $X_2$ and $R_2$; $X_1$ and $R_2$; and $X_2$ and $R_1$.

In example (e), the data is MNAR, as there are relationships between: Z and $X_1$; Z and $X_2$, Z and $R_1$; Z and $R_2$.

In example (f), the data is MNAR as there are relationships between: $X_1$ and $R_1$; $X_2$ and $R_2$; $X_1$ and $R_2$; $X_2$ and $R_1$; and $X_1$ and $X_2$.

In example (g), the data is MNAR as there are relationships between: Z and $X_1$; Z and $X_2$; $X_1$ and $R_2$; $X_2$ and $R_1$; and $X_1$ and $X_2$.

In example (h), the data is MNAR as there are relationships between Z and $X_1$; Z and $X_2$; $X_1$ and $R_1$; $X_2$ and $R_2$; $X_1$ and $R_2$; $X_2$ and $R_1$; $X_1$ and $R_2$; and $X_2$ and $R_1$.

In example (i), the data is MNAR as there are relationships between Z and $X_1$; Z and $X_2$; $X_1$ and $R_1$; $X_2$ and $R_2$; $X_1$ and $R_2$; $X_2$ and $R_1$; $X_1$ and $R_2$; $X_2$ and $R_1$; and $X_1$ and $X_2$.

In example (j), the data is MNAR as there are relationships between Z and $X_1$; Z and $X_2$; $X_1$ and $R_1$; $X_2$ and $R_2$; $X_1$ and $R_2$; $X_2$ and $R_1$; $X_1$ and $R_2$; $X_2$ and $R_1$; $X_1$ and $X_2$; and $R_1$ and $R_2$.

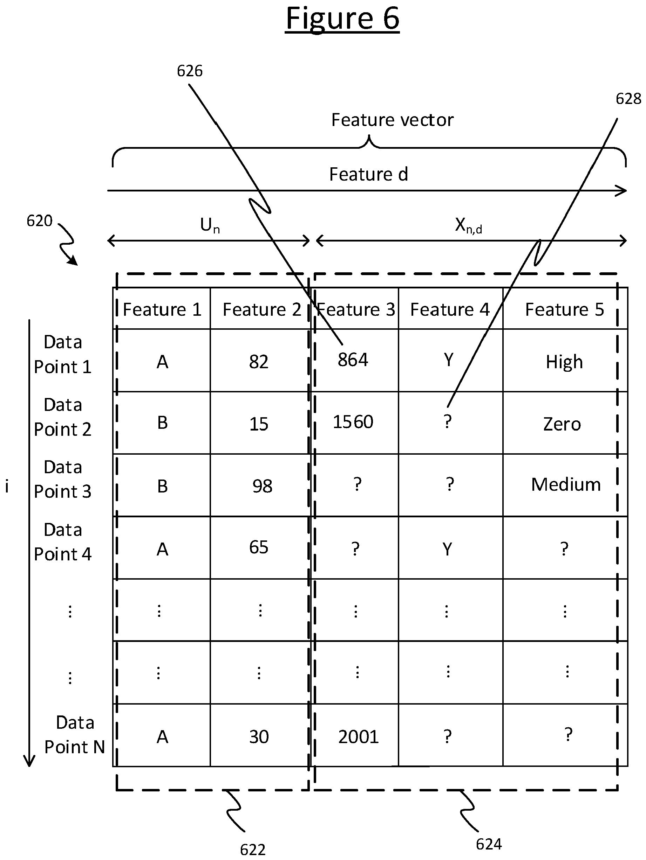

Figure 6 shows an example set of data 620. The data set 620 comprises a number of data points N and 5 different features. It should be understood that the specific values shown in data set 620 for specific data points and specific features are exemplary only. It should also be understood that there may be more or fewer features.

For each data point n, there is background data $u_n$. The total group of $u_n$ makes up group U. U may be considered to be a set of data comprising a value for every feature d and for every data point n in the set U. As such, U may be considered to comprise fully observed data. Although Figure 5 shows U comprises only two features, features 1 and 2 (i.e. for d=1, d=2), in some examples U may comprise more features.

Data 620 also comprises a set of data $x_{n,d}$ for features 3, 4 and 5 (i.e. d=3, d=4, d=5), although it will be appreciated that there may be more or fewer values feature in the set of data for $x_{n,d}$. For one or more of data points n of $x_{n,d}$, there are missing (unobserved) values, such as the value for $x_{2,4}$ 628 for example. These are indicated by "?" in the example of Figure 6. For one or more of data points n of $x_{n,d}$, there are observed values, such as the value for $x_{1,3}$ 626 for example

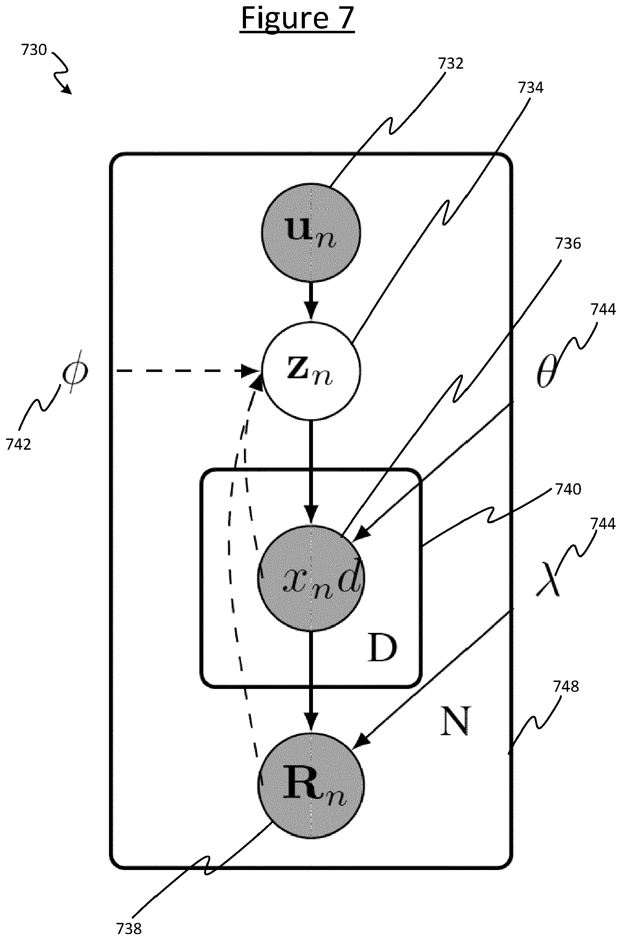

Figure 7 shows an example of a model that can be used to impute missing values for MNAR data.

A background data vector or value $u_n$ can be used to determine a prior p(z) of the latent vector $z_n$. This can be performed over a set of N data points 748. In some examples, the latent vectors determined by this method can be indicated as $z_n$'. In some examples, the prior p(Z) is only used in training and when performing imputation, both U and p(Z) are not used. The latent vectors $z_n$' may be determined based on $u_n$ using a relationship p(Z|U). p(Z|U) may be a distribution. In some examples the distribution may comprise a mean and variance determined by a neural network that takes U as an input. In some examples, the distribution may be a Gaussian, but in other examples other distributions may be used.

A latent vector $z_n$ can also be determined using a neural network having parameters $\phi$ 742, values $x_{n,d}$ 736 and mask vector $R_n$ 738. This can be performed over D features 740 and N data points 742. In some examples, during training, the prior ($Z_n$') is used to regularize the encoder output/approximate posterior, $q(Z_n|X_n)$. A neural network having parameters $\phi$ is used to determine the encoded distribution $q_\Phi(Z|X,R)$ (called approximate posterior) of Z. Once $q_\Phi(Z|X,R)$ is determined ,in some examples a Monte Carlo sample z is generated from z ~$q_\phi(Z|X,R)$. Monte Carlo sample z may give different values each time the sample is taken. In some examples, there are three related Z quantities: 1, the random variable Z; 2, the probabilistic distribution function $q_\Phi(Z|X,R)$ of Z; and 3, the Monte Carlo random sample z~ $q_\phi(Z|X,R)$.

Latent vector $Z_n$ (or $z_n$') 734 can be used to determine a computed value for variable $x_{n,d}$ 736 using a neural network having parameters $\theta$ 744. This can be performed over D features 740 and N data points 748.

Values $x_{n,d}$ 736 can be used to determine a mask vector $R_n$ 738 using a neural network having parameters $\lambda$ 746. This can be determined from the computed values of $x_{n,d}$ 736 determined as in the paragraph above. This can be performed over D features 740 and N data points 748.

In some examples, mask vector $R_n$ can also be determined based on a set of data values such input into the system, by determining which values are missing and using this to infer a mask vector $R_n$.

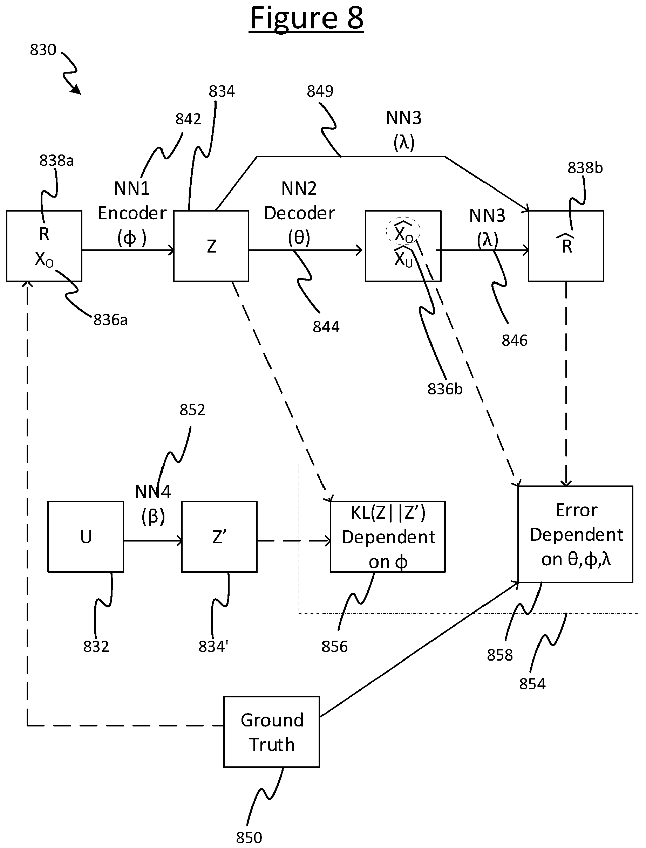

Figure 8 shows an example of how a system 830 for imputing missing values from MNAR data can be set up. This could be used to train the system of Figure 7, for example.

A set of data comprising observed values or vectors for x, indicated as $x_o$ 836a, are show in Figure 8. These $x_o$ values or vectors can comprise the observed data over feature vectors d and data points n. In some examples, these $x_o$ values may be measured by a system or user and the missing values may naturally have occurred. In other examples, the missing values can be artificially created by removing one or more values from a ground truth set of data 850. For example, for a certain feature d and/or for a certain data point n, values outside of a certain range or above a certain limit may be removed. For example, for a certain feature d, all values above a certain threshold may be removed to create missing data values in a data set. In another example, for a certain feature d, all values above a certain threshold may be removed to create missing data values in a data set. In other examples, for a certain feature d all values above a first threshold but below a second threshold may be removed to create missing data values in a data set.

A first neural network 842 using a first set of parameters $\phi$ encodes the $x_o$ values/vectors 836a and related R mask vectors 838a into one or more latent vectors Z 834. In some examples, NN 842 determines $q_\phi(Z|X,R)$ and then a random sample z is sampled from $q_\phi(Z|X,R)$

A fourth neural network 852 encodes a set of background data U 832, having fully observed data over all data points N (i.e., data with no missing values) to one or more latent vectors Z' 834a. The fourth neural network may use a set of parameters $\beta$. These parameters may be randomly generated. In some examples, these parameters may have been optimised prior to optimising $\theta$, $\phi$, $\lambda$. In some examples, $\beta$ may be further optimised along with $\theta$, $\phi$, $\lambda$ by minimising a loss function as described below. When the model is tuned correctly, the difference between Z 834 and Z'834a should be minimised. A measure of difference between Z and Z' is shown at 856. The measure of difference is dependent on the set of parameters $\phi$. In this example, Kullback-Leibler divergence of distributions $q_\Phi(Z|X,R)$ and p(Z')is used as measure of difference, however in other examples other methods of determining the difference between Z and Z' may be used.

A second neural network 844 having a second set of parameters $\theta$ is used to decode one or more random

samples z~ $q_\phi(Z|X,R)$ into one or more calculated observed values $\widehat{x_o}$ 836b. In some examples, calculated unobserved

values $\widehat{x_u}$ may also be determined.

A third neural network 846 having a third set of parameters $\lambda$ is used to determine a plurality of computed mask vectors R 838b. The computed mask vectors comprise a binary value for each feature to indicate whether a value for each feature is determined to be missing or not.

In some examples R is determined by p(R|X,Z). p(R|X,Z) may be a distribution whose mean parameter is determined by a neural network that takes X and Z as input. The distribution may be a Bernoulli distribution in some examples.

At 858, the computed observed values $\widehat{x_o}$ 836b and computed mask vectors R 838b are compared with ground truth data 850. As described above, in some examples this ground truth data 850 may have been used to generate R 838a and $X_o$ 836a. In other examples, the ground truth data 850 may be a separate set of data which is known or assumed to be correct. The computed observed values $\widehat{x_o}$ 836b and computed mask vectors R 838b are compared with ground truth data 850 to determine an error introduced by the first, second and third neural networks. The error may be determined using a mean squared difference, or any other suitable method for determining error between values. The error value 858 is dependent on $\theta$, $\phi$ and $\lambda$. In some examples, the error may be determined using maximum likelihood learning (ML), where we use Gaussian likelihoods for X (which is equivalent to minimizing mean squared difference), and Bernoulli likelihood for R (which is equivalent to binary cross entropy loss). In some examples, the error may be determined using a function of the L2 norm as the error $f(|\widehat{x_o} - x_o|^2)$.

A loss function 854 may be determined by a combination of the measure of difference 856 between distributions of Z and Z' determined respectively at 842 and 852 and the error value 858. In some examples the combination may comprise a sum of the measure of difference between Z and Z' 856 and the error value 858. In some examples a weighting factor may be applied to either of the measure of difference between Z and Z' 856 and the error value 858 before they are summed together.

To tune the system, the parameters $\theta$, $\phi$ and $\lambda$ of the first, second and third neural networks 842, 844 and 846 respectively can be varied in order to minimise the loss function 854. In some examples, a gradient descent algorithm is used to tune (change) parameters $\theta$, $\phi$ and $\lambda$ in order to minimise loss function 854. By minimising the loss function, a system that produces results similar to ground truth data 850 and that are linked to background data U is provided. This can be used to take into account any relationships between parameters of MNAR data. In some examples, latent vectors Z 834 can also be used to determine mask vectors R 838b by inputting latent vectors Z 834 into neural network 3 846 as shown at 849.

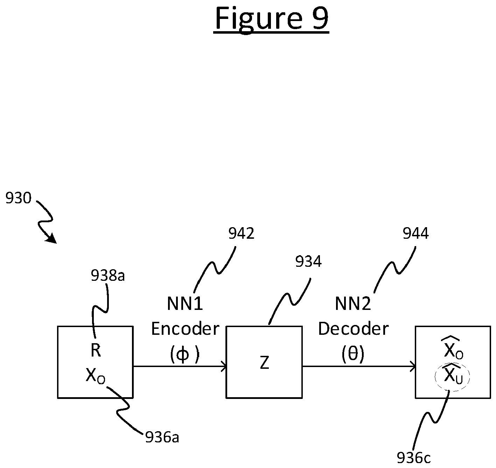

Figure 9 shows an example of a system 930 that can be used to impute missing values in a set of data. In some examples, the system 930 may have been trained and the parameters tuned according to the method described above with respect to system 830. System 930 may be based on system 730 in some examples.

In some examples according to Figure 9, the parameters $\phi$ and $\theta$ may have been set or temporarily set following the training method of Figure 8.

A set of observed values $x_o$ 936a is input into a first neural network 942 having parameters $\phi$ to encode the observed values $x_o$ 936a into a latent vector Z 934. Encoding observed values $x_o$ 936a into a latent vector Z 934 can be done in two steps. First, neural network 842 determines $q_\phi(Z|X,R)$. Then, a random sample z is sampled from $q_\phi(Z|X,R)$. In some examples, parameter $\phi$ may have been previously tuned by minimising a loss function as described above. Mask vector R 938a may also be input into first neural network 942 with observed values $x_o$ 936a to indicate to first neural network 942 which values are unobserved in the input set of data. In some examples, mask vector R 938a and observed values $x_o$ 936a may be inferred from an input set of data by determining which variables are missing from the input set of data.

The random sample of latent vector Z 934 can be decoded by second neural network 944 having parameters $\theta$ to decode one or more latent vectors Z to output expected observed values $\widehat{x_o}$ and expected $\widehat{x_U}$ values 936c for the values that were unobserved in the input set of data. As a random sample of Z is used, each time decoding is performed different values of expected observed values $\widehat{x_o}$ and expected $\widehat{x_U}$ values 936c may be output. These expected $\widehat{x_U}$ values 936c can be used to fill in gaps in the set of data to provide a full set of imputed data. As such, the information from the values included in the training data in Figure 8 is taken into account when imputing missing values, as well as the ground truth data 850 and the background data 832 used to train the data in Figure 8. This system can then be used to predict values for missing values in other sets of data.

In some examples, the above-mentioned systems may be used to train a machine learning model for imputing values of MNAR data. In some examples, the MNAR data may comprise one or more sensor values. Sensor data of one or more sensors that is missing from a data set may be imputed using the methods described above. The system for imputing the missing values may be tuned as described above. By imputing data for the sensors, estimates of unobserved values can be provided. This can be used to diagnose faults with one or more systems measured by the sensors. In other examples, this can be used to detect changes in the state of an environment measured by the sensors. In some examples, the sensors may be used to measure one or more devices. The imputed data can be used to diagnose faults with the one or more devices. The one or more devices may be located in a vehicle, for example.

In an example where the MNAR data comprises sensor data, the background data U may comprise a location in of a sensor in a system being measured by the sensors. In some examples, the background data may include a time of day for which each data point was recorded. The features of the data set that are imputed may comprise one or more of: temperature; air pressure; light conditions; levels of one or more chemicals in the atmosphere.

In some examples, the MNAR data may comprise values used in healthcare. Healthcare data that is missing from a healthcare data set may be imputed using the methods described above. The system for imputing the missing values may be tuned as described above. By imputing data for the sensors, estimates of unobserved values can be provided. This can be used to diagnose patients monitored by the healthcare system.

In an example where the MNAR data comprises sensor data, the background data U may comprise a gender of each patient. In some examples, the background data may include an age for each patient. The features of the data set that are imputed may comprise one or more of: blood sugar; blood oxygen; body temperature of one or more body parts; heart rate; a diagnosis of a health condition, such as diabetes or anaemia for example.

Taking the example of healthcare, it can be seen why data values may be MNAR. If a patient has a blood oxygen measurement recorded, they may also have a blood sugar level and diabetes diagnosis recorded as these measurements may have been made simultaneously during a hospital visit. Further, each of these measurements may be indirectly related to age and gender background data U, as these variables may have an indirect effect of a likelihood of a visit to a hospital. By taking into account the background data U as described above, the links between the MNAR data can be determined, which helps to account for biases in the data set and therefore provide more accurate diagnosis based on input data comprising missing values.

By taking into account background data for data points as described above, a system for imputing data can be accurately tuned taking into account reasons for a missingness MNAR mechanism in data. This provides more accurate subsequent decisions based on imputed values in data sets input into the model.

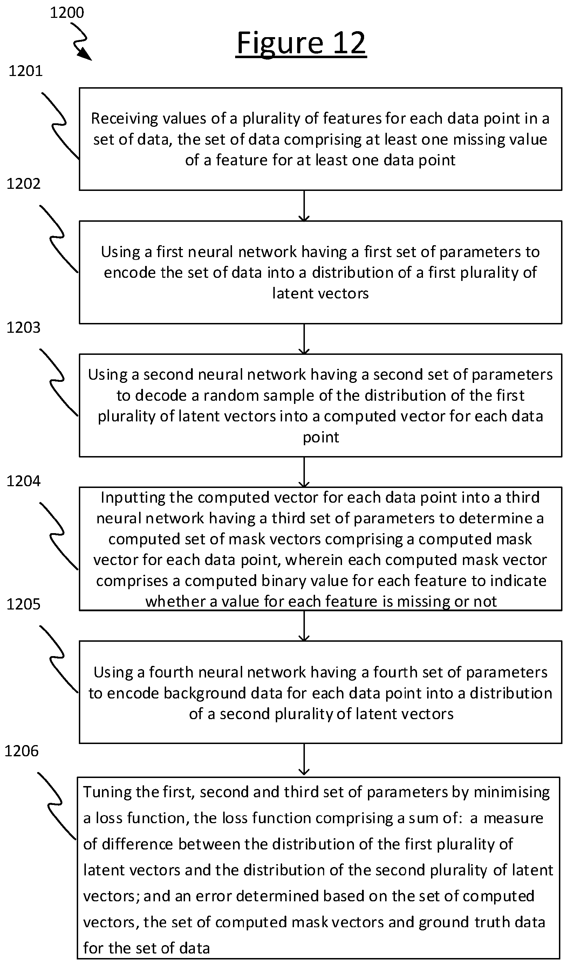

Figure 12 shows an example method 1200. The method may be performed by a computing device or over one or more computing devices.

At 1201, the method comprises receiving values of a plurality of features for each data point in a set of data, the set of data comprising at least one missing value of a feature for at least one data point.

At 1202, the method comprises using a first neural network having a first set of parameters to encode the set of data into a distribution of a first plurality of latent vectors.

At 1203, the method comprises using a second neural network having a second set of parameters to decode a random sample of the distribution of the first plurality of latent vectors into a computed vector for each data point.

At 1204, the method comprises inputting the computed vector for each data point into a third neural network having a third set of parameters to determine a computed set of mask vectors comprising a computed mask vector for each data point, wherein each computed mask vector comprises a computed binary value for each feature to indicate whether a value for each feature is missing or not.

At 1205, the method comprises using a fourth neural network having a fourth set of parameters to encode background data for each data point into a distribution of a second plurality of latent vectors.

At 1206, the method comprises tuning the first, second and third set of parameters by minimising a loss function, the loss function comprising a sum of: a measure of difference between the distribution of the first plurality of latent vectors and the distribution of the second plurality of latent vectors; and an error determined based on the set of computed vectors, the set of computed mask vectors and ground truth data for the set of data.

Real-world datasets often have missing values associated with complex generative processes, where the cause of the missingness may not be fully observed. This is known as missing not at random (MNAR) data. However, many imputation methods do not take into account the missingness mechanism, resulting in biased imputation values when MNAR data is present. Although there are a few methods that have considered the MNAR scenario, their model's identifiability under MNAR is generally not guaranteed. That is, model parameters can not be uniquely determined even with infinite data samples, hence the imputation results given by such models can still be biased. This issue is especially overlooked by many modern deep generative models. In this work, we fill in this gap by systematically analyzing the identifiability of generative models under MNAR. Furthermore, we propose a practical deep generative model which can provide identifiability guarantees under mild assumptions, for a wide range of MNAR mechanisms. Our method demonstrates a clear advantage for tasks on both synthetic data and multiple real-world scenarios with MNAR data.

There are few works considering the MNAR setting in scalable missing value imputation. On the one hand, many practical methods for MNAR do not have identifiability guarantees [Niels Bruun Ipsen, Pierre-Alexandre Mattei, and Jes Frellsen. not-miwae: Deep generative modelling with missing not at random data. arXiv preprint arXiv:2006.12871, 2020]. That is, the parameters can not be uniquely determined, even with access to infinite samples. As a result, missing value imputation based on such parameter estimation could be biased. On the other hand, there are theoretical analyses on the identifiability in certain scenarios [Wang Miao, Peng Ding, and Zhi Geng. Identifiability of normal and normal mixture models with nonignorable missing data. Journal of the American Statistical Association, 111(516):1673-1683, 2016.], but without associated practical algorithms for flexible and scalable settings (such as deep generative models). Moreover, MNAR data have many possible cases (as shown in Figure 5) based on different independence assumptions, making the discussion of identifiability difficult. This motivates us to fill this gap by extending identifiability results of deep generative models to different missing mechanisms, and provide a scalable practical solution. In some examples, our contribution are threefold:

- We provide a theoretical analysis of identifiability for generative models under different MNAR scenarios. More specifically, we provide sufficient conditions, under which the ground truth parameters can be uniquely identified via maximum likelihood (ML) learning using observed information. We also demonstrate how the assumptions can be relaxed in the face of real-world datasets. This provides foundation for practical solutions using deep generative models.

- Based on our analysis, we propose a practical algorithm model based on VAEs, named GINA (deep generative imputation model for missing not at random). This enables us to apply flexible deep generative models in a principled way, even in the presence of MNAR data.

- We demonstrate the effectiveness and validity of our approach by experimental evaluations on both synthetic data modeling, missing data imputation in real-world datasets, as well as downstream tasks such as active feature selection under missing data.

**Exemplary Background**

Model Identifiability: Identifiability is useful for analyzing model behaviour under missing data. We give the definition below [see e.g. Dawen Liang, Laurent Charlin, James McInerney, and David M Blei. Modeling user exposure in recommendation. In Proceedings of the 25th international conference on World Wide Web, pages 951-961, 2016 and also Thomas J Rothenberg. Identification in parametric models. Econometrica: Journal of the Econometric Society, pages 577-591, 1971]:

*Definition 2.1 (Model identifiability). Assume $p_{\vartheta}(X)$ is a distribution of some random variable X, $\vartheta$ is its parameter that takes values in some parameter space $\Omega_{\vartheta}$. Then, if $p_{\vartheta}(X)$ satisfies $p_{\vartheta 1}(X) \neq p_{\vartheta 2}(X) \Leftrightarrow \vartheta_1 \neq \vartheta_2, \forall \vartheta_1, \vartheta_2 \in \Omega_{\vartheta}$, we say that $p_{\vartheta}$ is identifiable w.r.t. $\vartheta$ on $\Omega_{\vartheta}$.*

In other words, a model pe(X) is identifiable, if different parameter configurations implies a different probabilistic distributions over the observed variables. With identifiability guarantee, if the model assumption is correct, the true generation process can be recovered. Next, we introduce necessary notations and of missing data, and set up a concrete problem setting.

Basic Notation Similar to the notations introduced by [Niels Bruun Ipsen, Pierre-Alexandre Mattei, and Jes Frellsen. not-miwae: Deep generative modelling with missing not at random data. arXiv preprint arXiv:2006.12871, 2020, and also Donald B Rubin. Inference and missing data. Biometrika, 63(3):581-592, 1976], let X be the complete set of variables in the system of interest. We call it observable variables. Let I={1,...,D} be the index set of all observable variables, i.e., {$X_i | i \in I$} (note that subscript i used in place of n here). Let Xo denote the set of actually observed variables, here $O \in I$ is a index set such that $X_o \subset X$. We call O the observable pattern. Similarly, $X_u$ denotes the set of missing/unobserved variables, and $X = Xo \cup X_u$. Additionally, we use R to denote the missing mask indicator variable, such that $R_n = 1$ indicates $X_n$ is observed, and $R_n = 0$ indicates otherwise. We call a probabilistic distribution p(X) on X the reference distribution, that is, the distribution that we would have observed if no missing mechanism is present; and we call the conditional distribution p(R|X) the missing mechanism, which decides the probability of each $X_n$ being missing. Then, we can define the marginal distribution of partially observed variables, which is given by $\log p(X_o; R) = \log \int_{X_U} (X_o, X_u, R) dX_U$. Finally, we will use lowercase letters to denote the realized values of the corresponding random variable. For example, $(x_O, r) \sim p(X_o, R)$ is the realization/samples of $X_o$ and R, and the dimensionality of $x_o$ may vary for each realizations.

**Problem setting** Suppose that we have a ground truth data generating process, denoted by $p_D(X_o, R)$, from which we can obtain (partially observed) samples $(x_o, r) \sim p_D(X_o, R)$. We also have a model to be optimized, denoted by $p_{(\theta, \lambda)}(X_o, X_u, R)$, where $\theta$ is the parameter of reference distribution $p_\theta(X)$, and $\lambda$ the parameter of missing mechanism $p_\lambda(R|X)$. Our goal can then be described as follows:

- To establish the identifiability of the model $p_{(\theta, \lambda)}(X_o, R)$. That is, we wish to uniquely and correctly identify $\hat{\theta}$, such that $p_{\hat{\theta}}(X) = p_D(X)$, given infinite amount of partially observed data samples from ground truth, $(x_o, r) \sim p_D(X_o, R)$.
- Then, given the identified parameter, we will be able to perform missing data imputation, using $p_{\hat{\theta}}(X_u | X_o)$. If our parameter estimate is unbiased, then our imputation is also unbiased, that is, $p_{\hat{\theta}}(X_u | X_o) = p_D(X_u | Xo)$ for all possible

configurations of $X_o$.

**Challenges in MNAR imputation** Recall the three types of missing mechanisms: if data is MCAR, p(R|X) = p(R); if if data is MAR, p(R|X) = p(R|$X_o$); otherwise, we call it MNAR. When missing data is MCAR or MAR, missing mechanism can be ignored when performing maximum likelihood (ML) inference based only on the observed data [Donald B Rubin. Inference and missing data. Biometrika, 63(3):581-592, 1976], as:

$$\arg\max_{\theta} \mathbb{E}_{(x_o,r)\sim p_{\mathcal{D}}(X_o,R)} \log p_{\theta}(X_o = x_o) = \arg\max_{\theta} \mathbb{E}_{(x_o,r)\sim p_{\mathcal{D}}(X_o,R)} \log p_{\theta}(X_o = x_o, R = r)$$

$$\text{where } \log p(X_o) = \log \int_{X_u} p(X_o, X_u) dX_u.$$

In practice, ML learning on $X_o$ can done by EM algorithm [Arthur P Dempster, Nan M Laird, and Donald B Rubin. Maximum likelihood from incomplete data via the em algorithm. Journal of the Royal Statistical Society: Series B (Methodological), 39(1):1-22, 1977 and also Roderick JA Little and Donald B Rubin. Statistical analysis with missing data, volume 793. John Wiley & Sons, 2019]. However, when missing data is MNAR, the above argument does not hold, and the missing data mechanism cannot be ignored during learning. Consider the representative graphical model example in Figure 5(d), which has appeared in many contexts of machine learning. In this graphical model, X is the cause of R, and the connections between X and R are fully connected, i.e., each single node in R are caused by the entire set X. All nodes in R are conditionally independent from each other given X. Clearly, this is an example of a data generating process with MNAR mechanism. In this case, Rubin proposed to jointly optimize both the reference distribution $p_{\theta}(X)$ and the missing data mechanism $p_{\lambda}(R|X)$, by maximizing:

$$\arg\max_{\theta,\lambda} \mathbb{E}_{(x_o,r)\sim p_{\mathcal{D}}(X_o,R)} \log p_{(\theta,\lambda)}(X_o = x_o, R = r) \tag{1}$$

This factorization is referred as selection modelling [Niels Bruun Ipsen, Pierre-Alexandre Mattei, and Jes Frellsen. not-miwae: Deep generative modelling with missing not at random data. arXiv preprint arXiv:2006.12871, 2020., and also Roderick JA Little and Donald B Rubin. Statistical analysis with missing data, volume 793. John Wiley & Sons, 2019]. There are multiple challenges if we want to Eq. 1 to obtain a practical model that provide unbiased imputation. First, we need model assumption to be consistent with the real-world data generation process, $p_D(X_o,R)$. Given a wide range of possible MNAR scenarios, it is a challenge to design a general model. Secondly, the model need to be identifiable to enable the possibility to learn the underlying process which leads to unbiased imputation. Next, we will analyze the identifiablity of generative models and propose a practical method that can be used in MNAR with mild assumptions.

**Establishing model identifiability under MNAR**

One key issue of training probabilistic models under MNAR missing data is its identifiability. Recall that (Definition 2.1) model identifiability characterize the property that the mapping from parameter θ to the distribution $p_{\theta}(X)$ is one-to-one. This is often closely related to maximum likelihood learning. In fact, it is not hard to show that Definition 2.1 is equivalent to the following Definition 3.1:

**Definition 3.1** (Equivalent definition of identifiability). We say a model p(X) is identifiable, if:

$$\arg\max_{\theta\in\Omega_{\theta}} \mathbb{E}_{x\sim p_{\theta^*}(X)} \log|p_{\theta}(X = x) = \theta^*, \quad \forall\theta^* \in \Omega_{\theta} \tag{2}$$

In other words, the "correct" model parameter θ* can be identified via maximum likelihood learning (under complete data), and the ML solution is unbiased. Similarly, when MNAR missing mechanism is present, we perform maximum likelihood learning on both $X_o$ and R using Eq. 1. Thus, we need log $p_{\theta,\lambda}(X_o,R)$ to be identifiable under MNAR, so that we can correctly identify the ground truth data generating process, and achieve unbiased imputation. The identifiability of log $p_{\theta,\lambda}(X_o,R)$ under MNAR is usually not guaranteed, even in some simplistic settings [Wang Miao, Peng Ding, and Zhi Geng. Identifiability of normal and normal mixture models with nonignorable missing data. Journal of the American Statistical Association, 111(516):1673-1683, 2016]. In this section, we will give the sufficient conditions for model identifiability under MNAR, and study how these can be relaxed for real-world applications.

**Sufficient conditions for identifiability under MNAR**

In this section, we give sufficient conditions where the model parameters can be uniquely identified by Rubin's objective, Eq. 1. Our aim is to i), find a set of model assumptions, so that it can cover many common scenarios and be flexible for practical interests; and ii), under those conditions, we want to show that its parameters can be uniquely determined by the partial ML solution Eq. 1. As shown in Figure 5, MNAR have many possible difference cases depending on its graphical structures. We want our results to cover every situation. Instead of doing case by case analysis, we will start our identifiability anaylsis with one fairly general case as the example shown in Figure 5 (h) where the missingness can be caused by other partially observed variable, by itself (self-masking) or by latent variables. Then, we will discuss how this analysis can be applied to other MNAR scenarios in the Section "Relaxing "correctness of parametric model" assumption (A1)".

**Data setting D1** Suppose the ground truth data generation process satisfies the following conditions: all variables X are generated from a shared latent confounder Z, and there are no connections among X; and the missingness indicator R variable can not be the parent of other variables. A typical example of such distribution is depicted in Figure 5 (h). We further assume that $p_D(X_o, X_u, R)$ has the following parametric form:

$$p_D(X_o, X_u, R) = \int_Z \prod_d p_{\theta_d^*}(X_d|Z) p(Z) p_{\lambda^*}(R|X, Z) dZ,$$

Where

$$p_{\lambda^*}(R|X, Z) = \prod_d p_{\lambda_d^*}(R_d|X, Z), \text{ for some } \theta^*, \lambda^*.$$

Then consider the following model:

Model assumption A1. We assume that our model has the same graphical representation, as well as parametric form as data setting D1, that is, our model can be written as:

$$p_{\theta,\lambda}(X_o, R) = \int_{X_u, Z} dX_u dZ \prod_d p_{\theta_d}(X_d|Z) \prod_d p_{\lambda_d}(R_d|X, Z) p(Z) \qquad (3)$$

Here, $(\theta, \lambda) \in \Omega$ are learnable parameters that belong to some parameter space $\Omega = \Omega_\theta \times \Omega_\lambda$. Each $\theta$ is the parameter that parameterizes the conditional distribution that connects $X_d$ and Z, $p_{\theta_d}(X_d|Z)$. Assume that the ground truth parameter of $p_D$ belongs to the model parameter space, $(\theta^*, \lambda^*) \in \Omega$. Given such a model, our goal is to correctly identify the ground truth parameter settings given partially observed samples from $p_D(X_o, X_u, R)$. That is, let $(\hat{\theta}, \hat{\lambda}) = \arg \max_{(\theta,\lambda) \in \Omega} E_{(X_o;r) \sim p_D(X_o;R)} \log p_{(\theta,\lambda)}(X_o = x_o, R = r)$, we would like to achieve $\hat{\theta} = \theta^*$. In order to achieve this, we must make additional assumptions.

**Assumption A2. Subset identifiability:** There exist a partition (which may be arbitrary in the set theory sense) of I, denoted by $A_I \{O_s\}_{1 \leq s \leq S}$, such that: for all $O_s \in A_I$, $p_\theta(X_{O_s})$ responsible for the identifiability on a subset of parameters.

**Assumption A3.** There exists a collection of observable patterns, denote by $\overline{A_I} := \{O_l'\}_{1 \leq l \leq L}$ , such that 1), $\overline{A_I}$ is a cover of I; 2), $p_D(X, R_{O_l'} = 1, R_{I \setminus O_l'}) > 0$ for all $1 \leq l \leq L$ and 3), for all index $c \in O_l'$ there exists $O_s \in A_I$ defined in A2, such that $c \in O_s \subset O_l'$ . This assumption is about the strict positivity of the ground truth data generating process, $p_D(X_o, X_u, R)$. Instead of assuming that complete case data are available, here we assume we should at least have some observations, $p_D(X; R_o = 1, R_u = 0) > 0$ for $O \in \widehat{A_I}$ , on which $p_\theta(X_o)$ is identifiable.

To summarize, **A1** ensures that our model has the same graphical representation/parametric forms as the ground truth; A2 $p_\theta(X_o) = \int_{X_u} p_\theta(X_o, X_u) dX_u$ should be at least identifiable for a collection of observable patterns that forms a partition of I; and **Assumption A3** ensures that $p_D(X_o, X_u, R)$ should be positive for certain important patterns (i.e., those on which $p(X_o)$ is identifiable). Given these assumptions, we have the following proposition (See Appendix C for proof.):

**Proposition 1** (Sufficient conditions for identifiability under MNAR). Let $p_{\theta,\lambda}(X_o, X_u, R)$ be a model on the observable variables X, and missing pattern R, and $p_D(X_o,X_u, R)$ be the ground truth distribution. Assume that they satisfies Data setting D1, Assumptions A1, A2 and A3.

Let $\Theta = \arg\max_{(\theta,\lambda)\in\Omega}E_{(xo,r)\sim pD(Xo,R)}\log p_{(\theta,\lambda)}(X_o = x_o, R = r)$ be the set of ML solutions of Equation 1. Then, we have $\Theta = \{\theta^*\} \times \Theta_\lambda$. That is, the ground truth model parameter $\theta^*$ can be uniquely identified via (partial) maximum likelihood learning.

**Missing value imputation as inference** Given a model $p_{(\theta)}(X_o, X_u)$, the missing data imputation problem can be then formularized by the Bayesian inference problem $p_\theta(X_u|X_o) \propto p_\theta(X_u, X_o)$. If the assumptions of Proposition 2 are satisfied, it enables us to correctly identify the ground truth reference model parameter, $\theta^*$. Therefore, the imputed values sampled from the posterior $p_{\theta^*}(X_u|X_o)$ will be unbiased, and can be used for down stream decision making tasks.

**Remark:** Note that Proposition 1 can be extended to the case where model identifiability is defined by equivalence classes. See Appendix F for details.

### Relaxing "correctness of parametric model" assumption (A1)

In this section, we further extend our previous results to the general MNAR cases including all different examples in Figure 1. In particular, we would like to see the if the same model setting in Section 3.1 can be applied to scenarios where $p_D(X_o, X_u, R)$ and $p_{\theta,\lambda}(X_o, X_u, R)$ might have different parametric forms, or even different graphical representations.

To start with, we would like to point out that the mismatch between $p_D(X_o,X_u, R)$ and the model $p_{\theta,\lambda}(X_o,X_u, R)$ can be, to a certain extent, modeled by the mappings between spaces of parameters. Let $\Omega \subset \mathbb{R}^I$ denote the parameter domain of our model, $p_{\theta,\lambda}(X_o, X_u, R)$. Suppose we have a mapping

$$\Phi : \underline{\Omega} \subset \mathbb{R}^I \mapsto \mathbb{R}^J$$

, such that $(\theta, \lambda) \in \underline{\Omega} \subset \Omega$ is mapped to another parameter space $(\tau,\gamma) = \Phi(\theta,\overline{\lambda}) \in \Xi \subset \mathbb{R}^J$ via $\Phi(\cdot)$. Here, $\underline{\Omega}$ is a subset of $\Omega$ on which $\Phi$ is defined. Then, the *re-parameterized* $p_{\theta,\lambda}(X_o, X_u, R)$ on parameter space $\Xi$ can be rewritten as:

$$\tilde{p}_{\tau,\gamma}(X_o, X_u, R) := p_{\Phi^{-1}(\tau,\gamma)}(X_o, X_u, R)$$

Assuming that the inverse mapping $\Phi^{-1}$ exists. Then trivially, if $p_{\theta,\lambda}(X_o,X_u, R)$ is identifiable with respect to $\theta$ and $\lambda$, then $\widetilde{p_{\tau,\gamma}}(X_o, R)$ should be also identifiable with respect to $\tau$ and $\gamma$.

**Proposition 2.** *Let* $\Omega \subset \mathbb{R}^I$ *be the parameter domain of the model* $p_{\theta,\lambda}(X_o, X_u, R)$. *Assume that the mapping* $\Phi : (\theta, \lambda) \in \underline{\Omega} \subset \mathbb{R}^I \mapsto (\tau, \gamma) \in \Xi \subset \mathbb{R}^J$ *is one-to-one on* $\underline{\Omega}$ *(equivalently, the inverse mapping* $\Phi^{-1} : \Xi \to \underline{\Omega}$ *is injective, and* $\underline{\Omega}$ *is its image set). Consider the induced distribution with parameter space* $\Xi$, *defined as* $\tilde{p}_{\tau,\gamma}(X_o, \overline{R}) :=$ $p_{\Phi-1(\tau,\gamma)}(X_o, R)$. *Then,* $\tilde{p}$ *is identifiable w.r.t.* $(\tau, \gamma)$, *if* $p_{\theta,\lambda}(X_o, R)$ *is identifiable w.r.t.* $\theta$ *and* $\lambda$.

Data setting D2 Suppose the ground truth $p_D(X_o,X_u, R)$ satisfies: X are all generated by shared latent confounders Z (as in D1), and R cannot be the cause of any other variables Typical examples are given by any of the cases in Fig 5 (excluding (j) where $R_1$ is the cause of $R_2$). Furthermore, the ground truth data generating process is given by the parametric form $p_D(X_o, X_u, R) = \overline{p}_{\tau,\gamma}(X_o, X_u, R)$, where $\Xi = \Xi_\tau \times \Xi_\gamma$ denotes its parameter space.

Then, for such ground truth data generating process, we can show that we can always find a model in the form of Equation ▣, such that there exists some mapping $\Phi$, that can model their relationship:

Lemma 1, *Suppose the ground truth data generating process* $\overline{p}_{\tau,\gamma}(X_o,Xu,R)$ *satisfies setting D2. Then, there exists a model* $p_{\theta,\lambda}(X_o, X_u, R)$, *such that:* 1), $p_{\theta,\lambda}(X_o, X_u, R)$ *can be written in the form of Equation 3 (i.e., Assumption A1; and 2), there exists a mapping* $\Phi$ *as described in Proposition 2, such that* $\overline{p}_{\tau,\gamma}(X_o, R) = p_{\Phi-1(\tau,\gamma)}(X_o, R)$, *for all* $(\tau, \gamma) \in \Xi$.

Model identification under data-model mismatch. Since we showed the identifiability can be preserved under the parameter space mapping (Proposition 2, next we will prove that if the model $p_{\theta,\lambda}(X_o,X_u,R)$ is trained on partially observed data points sampled from $\overline{p}_{\tau,\lambda}(X_o,X_u, R)$ that satusfies data setting D2, then the ML solution is still unbiased.

For this purpose, inspired by Lemma ▯, we work with the following additional assumption:

**Model identification under data-model mismatch.** Since we showed the identifiability can be preserved under the parameter space mapping (Proposition 2), next we will prove that if the model $p_{\theta,\lambda}(X_o, X_u, R)$ is trained on partially observed data points sampled from $\widetilde{p_{\Gamma,\gamma}}(X_o, X_u, R)$ that satisfies data setting D2, then the ML solution is still unbiased. For this purpose, inspired by Lemma 1, we work with the following additional assumption:

**Model Assumption A4** Let $\widetilde{p_{\Gamma*,\gamma*}}(X_o, X_u, R)$ denote our ground truth data generating process that satisfies data setting D2. Then, we assume our model $p_{\theta,\lambda}(X_o, X_u, R)$is the one that satisfies the description given by Lemma 1. That is, its parametric form is given by Equation 3, and there exists a mapping $\phi$ as described in Proposition 2, such that $\widetilde{p_{\Gamma,\gamma}}(X_o, R) = p_{\varphi^{-1}}(X_o, R)$.

Then, we have the following proposition:

**Proposition 3** (Sufficient conditions for identifiability under MNAR and data-model mismatch). Let $p_{\theta,\lambda}(X_o, X_u, R)$ be a model on the observable variables X and missing pattern R, and $p_D(X_o,X_u, R)$ be the ground truth distribution. Assume that they satisfies Data setting D2, Assumption A2, A3, and A4. Let

$$\Theta = \arg\max_{(\theta,\lambda)\in\underline{\Omega}} \mathrm{E}_{(x_o,r)\sim p_{\mathcal{D}}(X_o,R)} \log \widetilde{p}_{(\theta,\lambda)}(X_o = x_o, \widetilde{R} = r)$$

be the set of ML solutions of Equation 1. Then, we have $\Theta = \{\phi_{\Gamma}^{-1}(\Gamma*)\} \, x \, \Theta_{\lambda}$. Namely, the ground truth model parameter r* of $p_D$ can be uniquely identified (as $\phi(\theta*)$) via ML learning.

**Remark: practical implications** Proposition 3 allows us to deal with the cases where the parameterization of ground truth data generating process and model distribution are related through a set of mappings, $\{\phi_0\}$. In general, the graphical structure of $p_D(X_o,X_u, R)$can be any cases in Figure 5 excluding (j). Then, in those cases, we are still able to use a model that corresponds to Equation 3 (Fig 5 (h)) to perform ML learning, provided that our model is flexible enough (Assumption A4). This greatly improves the applicability of our identifiability results, and we can build a practical algorithm based on Equation 3 to handle many practical MNAR cases.

### GINA: A Practical Imputation Algorithm for MNAR

In the above section, we focused on the general model form. In this section, utilizing the results above, we propose GINA, a deep generative imputation model for MNAR data (Figure 2). GINA fulfils identifiability assumptions above, and can handle general MNAR case.

**The parametric form of GINA** We use utilize the flexibility of deep generative models to model the data generating process. We assume that the reference model $p_\theta(X)$ is parameterized by an identifiable VAE $[14]$ to satisfy Assumption A2. That is, $p_\theta(X|U) = \int_Z dZ p_\in (X - f(Z))p(Z|U)$, where $U$ is some fully observed auxiliary inputs. The decoder $p_\in(X- f_\theta(Z))$ is parameterized by a neural network, $f : \mathbb{R}^H \mapsto \mathbb{R}^D$. For convenience, we will drop the input $U$ to $p_\theta(X|U)$, and simply use $p_\theta(X)$ to denote $p_\theta(X|U)$. Finally, for *the* missing model $p_\lambda(R|X, Z)$, we use a Bernoulli likelihood model, $p_\lambda(R|X, Z) := \Pi_d \, \pi_d(X, Z)^{R_d}(1 - \pi_d(X, Z))^{1-R_d}$, where $\pi_d(X, Z)$ is parameterized by a neural network.

In Appendix G, we show that GINA fulfill the required assumptions of Proposition 1 and 3. Thus, we can use GINA to identify the ground truth data generating process, and perform missing value imputation under MNAR.

**Learning and imputation** In practice, the joint likelihood in Equation 1 is intractable. We introduce a variational inference network, $q_\phi(Z|X_o)$, which enable us to derive a importance weighted lower bound of $\log p_{\theta,\lambda}(X_o,R)$.

$$\log p_{\theta,\lambda}(X_o, R) \geq \mathcal{L}_K(\theta, \lambda, \phi, X_o, R) := \mathrm{E}_{z^1,\ldots,z^K, x_u^1,\ldots,x_u^K \sim p_\theta(X_u|Z)q_\phi(Z|X_o)} \log \frac{1}{K} \sum_k w_k$$

where $w_k = \frac{p_\lambda(R|X_o,X_u=x_u^k,Z=z^k)p_\theta(X_o,Z=z^k)}{q_\phi(Z=z^k|X_o)}$ is the importance weights.

Note that we that we did not notate the missing pattern R as additional input to $q_\phi$, as this information is already contained in $X_o$.

Then, we can optimize the parameters $\theta, \lambda, \phi$ by solving the following optimization problem

$$\theta^*, \lambda^*, \phi^* = \arg\max_{\theta, \lambda, \phi} \mathbb{E}_{(x_o, r) \sim p_{\mathcal{D}}(X_o, R)} \mathcal{L}_K\big(\theta, \lambda, \phi, X_o = x_o, R = r\big)$$

Given $\theta^*$, $\lambda^*$, $\phi^*$, we can impute missing data by solving the approximate inference problem:

$$p_\theta(X_u | X_o) = \int_Z p_\theta(X_u | Z) p_\theta(Z | X_o) dZ \approx \int_{|Z} p_\theta(X_u | Z) q_\phi(Z | X_o) dZ.$$

Related works

We mainly review recent works for handling MNAR data. In Appendix A, we provide a brief review of traditional methods that deal with MCAR and MAR.

When the missing data is MNAR, a general framework is to learn a joint model on both observable variables and missing patterns [Roderick JA Little and Donald B Rubin. Statistical analysis with missing data, volume 793. John Wiley & Sons, 2019], in which a model of missing data is usually assumed [Aude Sportisse, Claire Boyer, and Julie Josse. Imputation and low-rank estimation with missing not at random data. Statistics and Computing, 30(6):1629-1643, 2020 and also Joseph G Ibrahim, Stuart R Lipsitz, and M-H Chen. Missing covariates in generalized linear models when the missing data mechanism is non-ignorable. Journal of the Royal Statistical Society: Series B (Statistical Methodology), 61(1):173-190, 1999]. This approach is also widely adopted in imputation tasks. For example, in the field of recommender systems, different probabilistic models are used within such a framework [Jose Miguel Hernandez-Lobato, Neil Houlsby, and Zoubin Ghahramani. Probabilistic matrix factorization with non-random missing data. In International Conference on Machine Learning, pages 1512-1520. PMLR, 2014, *also* Benjamin M Marlin and Richard S Zemel. Collaborative prediction and ranking with nonrandom missing data. In Proceedings of the third ACM conference on Recommender systems, pages 5-12, 2009, *also* Xiaojie Wang, Rui Zhang, Yu Sun, and Jianzhong Qi. Doubly robust joint learning for recommendation on data missing not at random. In International Conference on Machine Learning, pages 6638-6647. PMLR, 2019, *also* Guang Ling, Haiqin Yang, Michael R Lyu, and Irwin King. Response aware model-based collaborative filtering. arXiv preprint arXiv:1210.4869, 2012, *also* Dawen Liang, Laurent Charlin, James McInerney, and David M Blei. Modeling user exposure in recommendation. In Proceedings of the 25th international conference on World Wide Web, pages 951-961, 2016]. A similar approach has also been taken in the context of causal approach to imputation [Yixin Wang and David M. Blei. The blessings of multiple causes, 2019, *also* Yixin Wang, Dawen Liang, Laurent Charlin, and David M Blei. The deconfounded recommender: A causal inference approach to recommendation. arXiv preprint arXiv:1808.06581, 2018, *also* Dawen Liang, Laurent Charlin, and David M Blei. Causal inference for recommendation]. Similar to the use of the missing model, they have used an explicit model of exposure and adopted a causal view, where MNAR is treated as a confounding bias. Apart from these, inverse probability weighting methods are also used to debias the effect of MNAR [Tobias Schnabel, Adith Swaminathan, Ashudeep Singh, Navin Chandak, and Thorsten Joachims. Recommendations as treatments: Debiasing learning and evaluation. arXiv preprint arXiv:1602.05352, 2016, *also* Xiaojie Wang, Rui Zhang, Yu Sun, and Jianzhong Qi. Doubly robust joint learning for recommendation on data missing not at random. In International Conference on Machine Learning, pages 6638-6647. PMLR, 2019, *also* Wei Ma and George H Chen. Missing not at random in matrix completion: The effectiveness of estimating missingness probabilities under a low nuclear norm assumption. arXiv preprint arXiv:1910.12774, 2019] for imputation.

One issue that is often ignored by many MNAR methods is the model identifiability. Identifiability under MNAR has been discussed for certain cases. For example, [Sheng Wang, Jun Shao, and Jae Kwang Kim. An instrumental variable approach for identification and estimation with nonignorable nonresponse. Statistica Sinica, pages 1097-1116, 2014.] proposed the instrumental variable approach to help the identification of MNAR data. [Wang Miao, Peng Ding, and Zhi Geng. Identifiability of normal and normal mixture models with nonignorable missing data. Journal of the American Statistical Association, 111(516):1673-1683, 2016] investigated the identifiability of normal and normal mixture models, and showed that identifiability for parametric models is highly non-trivial under MNAR. [Wang Miao, Lan Liu, Eric Tchetgen Tchetgen, and Zhi Geng. Identification, doubly robust estimation, and semiparametric efficiency theory of nonignorable missing data with a shadow variable. arXiv preprint arXiv:1509.02556, 2015] studied conditions for nonparametric identification using shadow variable technique. Despite the resemblance to the auxiliary variable in our approach, these mainly considers the supervised learning (multivariate regression) scenario. [Karthika Mohan, Judea Pearl, and Jin Tian. Graphical models for inference with missing data. Advances in neural information processing systems, 26:1277-1285, 2013] also discussed a similar topic based on a graphical and causal approach in a non-parametric setting. Although the notion of recoverability has been extensively discussed, their methods do not directly lead to practical imputation algorithms in a scalable setting. On the contrary, our work takes a different approach, in which we handle MNAR with a parametric setting, by dealing with learning and inference in latent variable models. We step aside from the computational burden with the help of recent advances in deep generative models for scalable imputation.

There has been a growing interest in applying deep generative models to missing data imputation. Scalable methods for training VAEs under MAR have been proposed. Similar methods have also been advocated in the context of importance weighted VAEs, multiple imputation, and heterogeneous tabular data imputation . However, the model identifiability remains unclear for such an approach, and the posterior distribution of missing data conditioned on observed data might be biased.

**Experiments**

We study the performance of GINA with both syntenic data and two real-world datasets with music recommendation and personalised education. The experimental setting details can be found in Appendix B.

**Synthetic MNAR dataset**

We first consider 3D synthetic MNAR datasets. We generate three synthetic datasets with nonlinear data generation process (shown in Appendix B.1). For all datasets, $X_1$, $X_2$, $X_3$ are generated via the latent variables, $Z_1$, $Z_2$, $Z_3$, where $X_1$ are fully observed and $X_2$ and $X_3$ are MNAR. For dataset A, we apply self-masking (similar to Figure 5(c)): $X_n$ will be missing if $X_n > 0$. For datasets B and C, we apply latent-dependent self-masking: $X_n$ will be missing, if $g(X_n, Z_1, Z_2, Z_3) > 0$, where g is a linear mapping whose coefficients are randomly chosen.

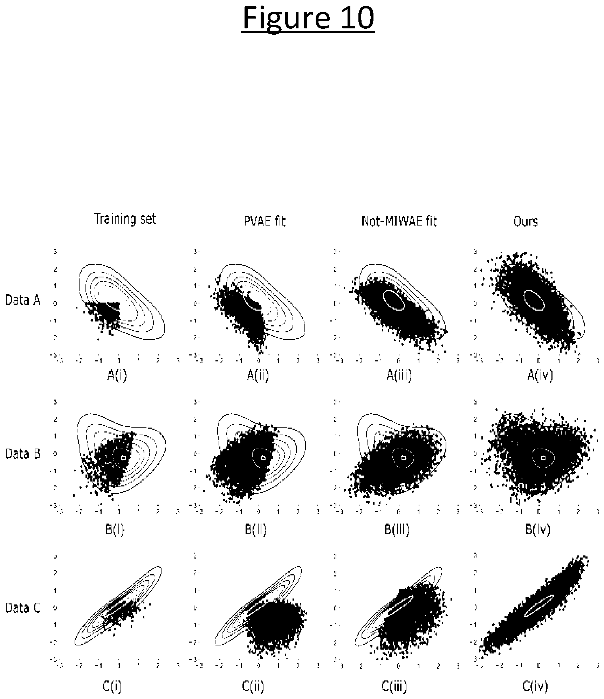

Figure 10 shows a Visualization of generated X2 and X3 from synthetic experiment. Row-wise (A-C) plots for dataset A, B, and C, respectively; Column-wise (i-iv): training set (only displays fully observed samples), PVAE samples, Not-MIWAE samples, and GINA samples, respectively. Contour plot: kernel density estimate of ground truth density of complete data.

We train GINA and baseline models with partially observed data. Then, we use the trained models to generate random samples. By comparing the generated samples with the ground truth data density, we can evaluate whether $p_D(X)$ is correctly identified. Results are visualized in Figure 10. In addition, we show the imputation results in Appendix I. Across three datasets, PVAE performs poorly, as it does not account for the MNAR mechanism. Not-MIWAE performs better than PVAE, as it is able to generate samples that are closer to the mode. However, it is still biased more towards the observed values. On the other hand, GINA is much more aligned to ground truth, and is able to recover the ground truth from partially observed data. This experiment showed the clear advantage of our method under different MNAR situations.

**Recommender dataset imputation with random test set**

Next, we apply our models to recommendation systems on Yahoo! R3 dataset [Benjamin M Marlin and Richard S Zemel. Collaborative prediction and ranking with nonrandom missing data. In Proceedings of the third ACM conference on Recommender systems, pages 5-12, 2009, *and* Yixin Wang, Dawen Liang, Laurent Charlin, and David M Blei. The deconfounded recommender: A causal inference approach to recommendation. arXiv preprint arXiv:1808.06581, 2018] for user-song ratings which is designed to evaluate MNAR imputation. It contains an MNAR training set of more than 300K self-selected ratings from 15,400 users on 1,000 songs, and an MCAR test set of randomly selected ratings from 5,400 users on 10 random songs. We train all models on the MNAR training set, and evaluate on MCAR test set. This is repeated 10 times with different random seeds. Both the missing model for GINA (p(RjX;Z)) and Not-MIWAE (p(RjX)) are parameterized by linear neural nets with Bernoulli likelihood functions. The decoders for GINA, PVAE, and Not-MIWAE uses Gaussian likelihoods with the same network structure. See Appendix B for implementation details and network structures.

We compare to the following baselines: 1), probabilistic matrix factorization (PMF) [Andriy Mnih and Russ R Salakhutdinov. Probabilistic matrix factorization. Advances in neural information processing systems, 20:1257-1264, 2007]; 2), inverse probability weighted PMF [Tobias Schnabel, Adith Swaminathan, Ashudeep Singh, Navin Chandak, and Thorsten Joachims. Recommendations as treatments: Debiasing learning and evaluation. arXiv preprint arXiv:1602.05352, 2016]; 3), Deconfounded PMF [Yixin Wang, Dawen Liang, Laurent Charlin, and David M Blei. The deconfounded recommender: A causal inference approach to recommendation. arXiv preprint arXiv:1808.06581, 2018]; 4), PMF with MNAR/MAR data [6]; 5), CPTv and Logitv models for MNAR rating [Benjamin M Marlin and Richard S Zemel. Collaborative prediction and ranking with nonrandom missing data. In Proceedings of the third ACM conference on Recommender systems, pages 5-12, 2009]; 6), Oracle [Jose Miguel Hernandez-Lobato, Neil Houlsby, and Zoubin Ghahramani. Probabilistic matrix factorization with non-random missing data. In International Conference on Machine Learning, pages 1512-1520. PMLR, 2014]: predicts ratings based on their marginal distribution in the test set; and 7) AutoRec [Suvash Sedhain, Aditya Krishna Menon, Scott Sanner, and Lexing Xie. Autorec: Autoencoders meet collaborative filtering. In Proceedings of the 24th international conference on World Wide Web, pages 111-112, 2015]: Autoencoders that ignores missing data.

Results are shown in Table 1. Our method (GINA) gives the best performance among all methods. Also, VAE-based methods are consistently better than PMF-based methods, and MNAR-based models consistently outperform their MAR versions. More importantly, among VAE-based models, our GINA outperforms its non-identifiable counterpart (Not-MIWAE), and MAR counterpart (PVAE), where both models can not generate unbiased imputation.

Table 1: Test MSE on Yahoo! R3

| Method | Test MSE |
| --- | --- |
| *Matrix Factorization Methods* | |
| PMF | 1.401 |
| IPW-PMF | 1.375 |
| Deconfounded-PMF | 1.329 |
| PMF-MNAR | 1.483 |
| PMF-MAR | 1.480 |
| *VAE-based models* | |
| PVAE | $1.259 \pm 0.003$ |
| PVAE w/o **IW** | $1.261 \pm 0.004$ |
| Not-MIWAE | $1.078 \pm 0.000$ |
| **GINA** | **$1.052 \pm 0.002$** |
| *Others* | |
| CPTv-MNAR | 1.056 |
| Logitvd-MNAR | 1.141 |
| AutoRec | 1.199 |
| Oracle-test | 1.057 |

**Missing data imputation and active question selection on Eedi education dataset**

Finally, we apply our methods to the Eedi education dataset [Zichao Wang, Angus Lamb, Evgeny Saveliev, Pashmina Cameron, Yordan Zaykov, Jose Miguel Hernandez-Lobato, Richard E Turner, Richard G Baraniuk, Craig Barton, Simon Peyton Jones, Simon Woodhead, and Cheng Zhang. Diagnostic questions: The neurips 2020 education challenge. arXiv preprint arXiv:2007.12061, 2020], one of the largest real-world education response datasets. We consider the Eedi competition task 3 dataset, which contains over 1 million responses from 4918 students to 948 multiple-choice diagnostic questions. Each diagnostic question is a multiple-choice question. We consider predicting whether a student answers a question correctly or not. Over 70% of the entries are missing. The dataset also contains student metadata which we use as the auxiliary variables. In this experiment, we randomly split the data in a 90% train/ 10% test/ 10% validation ratio, and train our models on the response outcome data.

We evaluate our model on two tasks. Firstly, we perform missing data imputation, where different methods perform imputation over the test set. As opposed to Yahoo! R3 dataset, now the test set is MNAR, thus we use the evaluation method suggested by [Yixin Wang, Dawen Liang, Laurent Charlin, and David M Blei. The deconfounded recommender: A causal inference approach to recommendation. arXiv preprint arXiv:1808.06581, 2018.], where we evaluate the average per-question MSE For each question, over all students with non-empty response. Then, the MSEs of all questions averaged. We call this metric the debiased MSE. While regular MSE might be biased toward questions with more responses, the debiased MSE treats all questions equally, and can avoid selection bias to a certain degree. We report results for 10 repeats in the first column in Table 2. We can see that our proposed GINA achieves significantly improved results comparing to the baselines.

Secondly, we evaluate personalized education through active question selection [Chao Ma, Sebastian Tschiatschek, Konstantina Palla, Jose Miguel Hernandez-Lobato, Sebastian Nowozin, and Cheng Zhang. Eddi: Efficient dynamic discovery of high-value information with partial vae. arXiv preprint arXiv:1809.11142, 2018] on the test set which is task 4 from this competition dataset. The procedure is as follows: for each student in the test set, at each step, the trained generative models are used to decide which is the most informative missing question to collect next. This is done by maximizing the information reward as in [Chao Ma, Sebastian Tschiatschek, Konstantina Palla, Jose Miguel Hernandez-Lobato, Sebastian Nowozin, and Cheng Zhang. Eddi: Efficient dynamic discovery of high-value information with partial vae. arXiv preprint arXiv:1809.11142, 2018] (see Appendix H for details).Since at each step, different students might collect different questions, there isn't a simple way to debias the predictive MSE as in the imputation task. Alternatively, we evaluate each method with the help of question meta data (difficulty level, which is a scalar).Intuitively, when the student response to the previously collected question is correct, we expect the next diagnostic question which has higher difficulty levels, and vice versa.Thus, we can evaluate the mean level change after correct/incorrect responses, and expect them to have significant differences. We also perform t-test between the level changes after incorrect/correct responses and report the p-value. We can see in Table 2, GINA is the only method that reports a significant p-value (<0.05) between the level changes of next collected questions after incorrect/correct responses which are desired. This further indicates that our proposed GINA predicts the unobserved answer with the desired behavior.

Table 2: Performance on Eedi education dataset (with standard errors)

| Method | Debiased MSE | Level change (correct) | Level change (incorrect) | p-value |
|---|---|---|---|---|
| PVAE | 0.194±0.001 | 0.131±0.138 | -0.101±0.160 | 0.514 |
| Not-MIWAE | 0.192±0.000 | 0.062±0.142 | -0.073±0179 | 0.561 |
| GINA | **0.188±0.001** | **0.945±0.151** | **-0.353±0.189** | **$1.01\times10^{-7}$** |

### Conclusion

We provide an analysis of identifiability for generative models under MNAR, and studies sufficient conditions of identifiability under different scenarios. We provide sufficient conditions under which the model parameters can be uniquely identified, via joint maximum likelihood learning on $X_o$ and R. Therefore, the learned model can be used to perform unbiased missing data imputation. We proposed a practical algorithm based on VAEs, which enables us to apply flexible generative models that is able to handle missing data in a principled way.

### Appendix A Traditional methods for handling missing data

Methods for handling missing data has been extensively studied in the past few decades. Those methods can be roughly classified into two categories: complete case analysis (CCA) based, and imputation based methods. CCA based methods, such as listwise deletion [Paul D Allison. Missing data. Sage publications, 2001] and pairwise deletion [HerbertWMarsh. Pairwise deletion for missing data in structural equation models: Nonpositive definite matrices, parameter estimates, goodness of fit, and adjusted sample sizes. Structural Equation Modeling: A Multidisciplinary Journal, 5(1):22-36, 1998] focuses on deleting data instances that contains missing entries, and keeping those that are complete. Listwise/pairwise deletion methods are known to be unbiased under MCAR, and will be biased under MAR/MNAR. On the contrary, imputation based methods tries to replace missing values by imputed/predicted values. One popular imputation technique is called single imputation, where only produce one single set of imputed values for each data instance. Standard techniques of single imputation include mean/zero imputation, regression-based imputation [Paul D Allison. Missing data. Sage publications, 2001], no-parametric methods [Phimmarin Keerin, Werasak Kurutach, and Tossapon Boongoen. Cluster-based knn missing value imputation for dna microarray data. In 2012 IEEE International Conference on Systems Man, and Cybernetics (SMC), pages 445-450. IEEE, 2012]. As opposed to single imputation, the multiple imputation (MI) methods such as MICE [Ian R White, Patrick Royston, and Angela M Wood. Multiple imputation using chained equations: issues and guidance for practice. Statistics in medicine, 30(4):377-399, 2011], was first proposed by Rubin [Donald B Rubin. Formalizing subjective notions about the effect of nonrespondents in sample surveys. Journal of the American Statistical Association, 72(359):538-543, 1977] is essentially a simulation-based methods that returns multiple imputation values for subsequent statistical analysis. Unlike single imputation, the standard errors of estimated parameters produced with MI is known to be unbiased [Donald B Rubin. Multiple imputation for nonresponse in surveys, volume 81. John Wiley & Sons, 2004]. Apart from MI, there exists other methods such as full information maximum likelihood [James L Arbuckle, George A Marcoulides, and Randall E Schumacker. Full information estimation in the presence of incomplete data. Advanced structural equation modeling: Issues and techniques, 243:277, 1996] and inverse probability weighting [James M Robins, Andrea Rotnitzky, and Lue Ping Zhao. Estimation of regression coefficients when some regressors are not always observed. Journal of the American statistical Association, 89(427):846-866, 1994], which can be directly applied to MAR without introducing additional bias. However, these methods assumes a MAR missing data mechanism, and cannot be directly applied to MNAR without introducing bias.

### Appendix B Implementation Details

We first introduce the general settings of GINA and other baselines. Our model (GINA) is based on the practical algorithm in discussed above. By default, we will set the auxiliary variable U to be some fully observed meta feature (if there's any) or the missing mask pattern (if the dataset does not have a fully observed meta feature). The most important baselines are as follows: 1), Partial VAE (PVAE) [Chao Ma, Sebastian Tschiatschek, Konstantina Palla, Jose Miguel Hernandez-Lobato, Sebastian Nowozin, and Cheng Zhang. Eddi: Efficient dynamic discovery of high-value information with partial vae. arXiv preprint arXiv:1809.11142, 2018]: a VAE model with slightly modified ELBO objective, specifically designed for MAR data; and 2), Not-MIWAE [Niels Bruun Ipsen, Pierre-Alexandre Mattei, and Jes Frellsen. not-miwae: Deep generative modelling with missing not at random data. arXiv preprint arXiv:2006.12871, 2020], a VAE model for MNAR data trained by jointly maximizing the likelihood on both the partially observed data and the missing pattern. As opposed to our model, the latent priors p(Z) for both PVAE and Not-MIWAE are parameterized by a standard normal distribution, hence no auxiliary variables are used. Also, note that the graphical model of Not-MIWAE is described by Fig 5 (a), and does not handle the scenarios where the ground truth data distribution follows other graphs like Fig 5 (g). Finally, the inference model q(ZjX) for the underlying VAEs is set to be diagonal Gaussian distributions whose mean and variance are parameterized by neural nets as in standard VAEs [Diederik P Kingma and Max Welling. Auto-encoding variational bayes. arXiv preprint arXiv:1312.6114, 2013] (with missing values replaced by zeros[Alfredo Nazabal, Pablo M Olmos, Zoubin Ghahramani, and Isabel Valera. Handling incomplete heterogeneous data using vaes. Pattern Recognition, 107:107501, 2020, *also* Niels Bruun Ipsen, Pierre-Alexandre Mattei, and Jes Frellsen. not-miwae: Deep generative modelling with missing not at random data. arXiv preprint arXiv:2006.12871, 2020, *also* Pierre-Alexandre Mattei and Jes Frellsen. Miwae: Deep generative modelling and imputation of incomplete data sets. In International Conference on Machine Learning, pages 4413-4423. PMLR, 2019), or a permutation invariant set function proposed in [Chao Ma, Sebastian Tschiatschek, Konstantina Palla, Jose Miguel Hernandez-Lobato, Sebastian Nowozin, and Cheng Zhang. Eddi: Efficient dynamic discovery of high-value information with partial vae. arXiv preprint arXiv:1809.11142, 2018]. See Appendix B for more implementation details for each tasks.

### B.1 Synthetic dataset implantation details

**Data Generation** The ground truth data generating process is given by $Z_1, Z_2, Z_3 \sim N(0, 1)$, $X_1 = h_w(Z_1, Z_2, Z_3)+\varepsilon_1,)$, $X_2 = f_{\theta 1}(Z_1, Z_2, Z_3)+\varepsilon_2$, $X_3 = f_{\theta 2}(Z_1, Z_2, Z_3)+\varepsilon_3$ where $h_w$ is a linear mapping with coefficients w, f is some non-linear mapping whose functional form is given by Appendix B, $\theta_1$ & $\theta_2$ are two different sets of parameters for f, and $\varepsilon_1$, $\varepsilon_2$, $\varepsilon_3$, are observational noise variables with mean 0, variance 0.01. We randomly sample three different sets of parameters, and generate the corresponding datasets (Figure 3), namely dataset A, B, and C. Each dataset consists of 2000 samples. Then, we apply different missing mechanisms for each dataset. For all datasets, we assume that $X_1$ are fully observed and $X_2$ and $X_3$ are MNAR. , and missing mechanism will be only applied to $X_2$ and $X_3$. Finally, all observable variables are standardized. **Network Structure and training** We use 5 dimensional latent space with fully factorized standard normal priors. The decoder part $p_\theta(X|Z)$ uses a 5-10-D structure, where D = 3 in our case. For inference net, we use a zero imputing [Wei Ma and George H Chen. Missing not at random in matrix completion: The effectiveness of estimating missingness probabilities under a low nuclear norm assumption. arXiv preprint arXiv:1910.12774, 2019] with structure 2D-10-10-5, that maps the concatenation of observed data (with missing data filled with zero) and mask variable R into distributional parameters of the latent space. For the factorized prior p(Z|U) of the i-VAE component of GINA, we used a linear network with one auxiliary input (which is set to be fully observed dimension, X1). The missing model $p_\lambda(R|X)$ for GINA and i-NotMIWAE is a single layer neural network with 10 hidden units. All neural networks use Tanh activations (except for output layer, where no activation function is used). All baselines uses importance weighted VAE objective with 5 importance samples. The observational noise for continuous variables are fixed to log $\sigma$ = -2. All methods are trained with Adam optimizer with batchsize with 100, and learning rate 0.001 for 20k epochs.

### B.2 Yahoo!R3 experiment implementation details

Before training, all user ratings are scaled to be between 0 and 1 (such scaling will be reverted during evaluation). For all baselines, we use Gaussian likelihood with variance of 0.02. We use 20 dimensional latent space, and the decoder $p_\theta(X|Z)$ uses a 20-10-D structure. We use Tanh activation function for the decoder (except for output layer, where no activation function is used). For inference net, we uses the point net structure proposed in [Chao Ma, Sebastian Tschiatschek, Konstantina Palla, Jose Miguel Hernandez-Lobato, Sebastian Nowozin, and Cheng Zhang. Eddi: Efficient dynamic discovery of high-value information with partial vae. arXiv preprint arXiv:1809.11142, 2018], we use 20 dimensional feature mapping h parameterized by a single layer neural network and 20 dimensional ID vectors for each variable. The symmetric operator is set to be the summation operator. The missing model p(R = 1jX) for GINA and i-NotMIWAE is parameterized by linear neural network. All methods are trained with 400 epochs with batchsize 100.

### B.3 Eedi dataset experiment implementation details

Since Eedi dataset is a binary matrix with 1/0 indicating that the student response is correct/incorrect, we use Bernoulli likelihood for decoder p_(XjZ). For We use 50 dimensional latent space, and the decoder $p_\theta(X|Z)$ uses a 50-20-50-D structure. Such structure is chosen using the validation set using grid search. We use ReLU activation function for the decoder (except for output layer, where no activation function is used). For inference net, we use the point net structure that were used in Yahoo!R3 dataset. Here, the difference is that we use 50 dimensional feature mapping h parameterized by a single layer neural network and 10 dimensional ID vectors for each variable. All methods are trained with 1k epochs with batchsize 100. A trick that we used for both not-MIWAE and GINA to improve the imputation performance, is to turn down the weight of the likelihood term for $p_\lambda(R|X)$, by multiplying a factor of $\beta = 0:5$. This is due to that majority of the student response matrix is missing, the $p_\lambda(R|X)$, will most likely dominate the training, hence the learning algorithm will prefer more about learning the models that explains the missing mechanism better, over the models that explains the observable variables X better.

## C Proof for Proposition 1

**Proof** : First, we show that $p_{\theta,\lambda}(X_{O'_i}, R)$ is *partially identifiable* (i.e., identifiable on subset of parameters) on $\{\theta_d\}_{d \in O'_i}$ for $\forall O'_i \in \bar{A}_\mathcal{I}$. We prove this by contradiction. Suppose there exists two different set of parameters $(\theta^1, \lambda^1)$ $(\theta^2, \lambda^2)$, such that there exits at least one index $c \in O'_i$ for some $l$, such that $\theta^1_c \neq \theta^2_c$, and $p_{(\theta^1,\lambda^1)}(X_{O'_i}, R) = p_{(\theta^2,\lambda^2)}(X_{O'_i}, R)$. That is, $p(X_{O'_i}, R)$ is not identifiable on $\{\theta_d\}_{d \in O'_i}$.

According to **Assumption A3**, there exists $O_s \in \mathcal{A}_\mathcal{I}$, such that $c \in O_s \subset O'_i$. Then, consider the marginal

$$p_\theta(X_{O_s}) = \int_{Z,R,X_{\setminus O_s}} dZ \prod_{d \in O_s} p_{\theta_d}(X_d|Z) p_\lambda(R|X,Z) p(Z) = p_{\theta_{d \in O_s}}(X_{O_s})$$

. Since $p_{(\theta^1,\lambda^1)}(X_{O'_i}, R) = p_{(\theta^2,\lambda^2)}(X_{O'_i}, R)$, we have $p_{(\theta^1_{O_s})}(X_{O_s}) = p_{(\theta^2_{O_s})}(X_{O_s})$ (the joint uniquely determines marginals). However, this contradicts with our **Assumption A2** that $p_{\theta_{O_s}}(X_{O_s})$ is identifiable: this identifiability assumption implies that we should have $p_{(\theta^1_{O_s})}(X_{O_s}) \neq p_{(\theta^2_{O_s})}(X_{O_s})$. Therefore, by contradiction, we have $p(X_{O'_i}, R)$ is partially identifiable on $\{\theta_d\}_{d \in O'_i}$ for $\forall O'_i \subset \bar{A}_\mathcal{I}$.

Then, we proceed to prove that the ground truth parameter $\theta^*$ can be uniquely identified via ML learning. Based on our **Assumption A1**, upon optimal ML solution,

$$\Theta_{ML} = \arg \max_{(\theta,\lambda) \in \Omega} E_{(x_o,r) \sim p_D(X_o,R)} \log p_{(\theta,\lambda)}(X_o = x_o, R = r)$$

, we have the following identity:

$$p_{(\theta_{ML}, \lambda_{ML})}(X_o, R) = p_{(\theta^*, \lambda^*)}(X_o, R)$$

holds for all $(\theta_{ML}, \lambda_{ML}) \in \Theta_{ML}$, and all $\forall O \subset \mathcal{I}$ that satisfies $p(X_o, X_u, R_o = 1, R_u = 0) > 0$. Note also that:

$$p_{(\theta_{ML}, \lambda_{ML})}(X_o, R) = \int_{Z, X_{\mathcal{I} \setminus O}} dZ \prod_d p_{\theta_d^{ML}}(X_d|Z) p_{\lambda_{ML}}(R|X) p(Z)$$

, which depends on both $\theta_o$ and $\lambda$. Since we have already shown that $p_{(\theta,\lambda)}(X_{O'_i}, R)$ are partially identifiable on $\{\theta_d\}_{d \in O'_i}$ for $\forall O'_i \subset \bar{A}_\mathcal{I}$ and according to **Assumption A3**, $p_D(X_o, X_u, R_{O'_i} = 1, R_{\mathcal{I} \setminus O'_i} = 0) > 0$. Therefore, upon optimal solution

, we have that

$$\{\theta_d = \theta_d^*\}_{d \in O'_i}$$

holds for all $\forall O'_i \subset \bar{A}_\mathcal{I}$. Since we have assumed that $\bigcup_{O'_i \in \bar{A}_\mathcal{I}} X_{O'_i} = \mathcal{I}$ in **Assumption 3** (i.e., $\bar{A}_\mathcal{I}$ is a cover of $\mathcal{I}$ ), this guarantees that

$$\theta_d^{ML} = \theta_d^*$$

for all $d$. In other words, we are able to uniquely identify $\theta^*$ from observed data, therefore

$$\Theta = \{\theta^*\} \times \Theta_\lambda$$

## Appendix D Proof for Proposition 2

## D  Proof of Proposition 2

**Proof**  Let $(\tau_1, \gamma_1)$ and $(\tau_2, \gamma_2)$ be two different parameters in $\Xi$. Then, we have

$$\tilde{p}_{\tau_1,\gamma_1}(X_o, R)$$
$$= p_{\Phi^{-1}(\tau_1,\gamma_1)}(X_o, R)$$
$$\neq p_{\Phi^{-1}(\tau_2,\gamma_2)}(X_o, R)$$
$$= \tilde{p}_{\tau_2,\gamma_2}(X_o, R)$$

where the third line is due to the fact that $\Phi^{-1}$ is injective and $p_{\theta,\lambda}(X_o, R)$ is identifiable with respect to $\theta$ and $\lambda$.  □

**Appendix E Relaxing Assumption 1**

**E.1 Proof of Lemma 1**

**Lemma 1.** Suppose the ground truth data generating process $\widetilde{p_{\Gamma*,\gamma*}}(X_o, X_u, R)$ satisfies setting D2. Then, there exists a model $p_{\theta,\lambda}(X_o, X_u, R)$ such that: 1), $p_{\theta,\lambda}(X_o, X_u, R)$ can be written in the form of Equation 3 (i.e., Assumption A1; and 2), there exists a mapping $\phi$ as described in Proposition 2, such that $\widetilde{p_{\Gamma,\gamma}}(X_o, R) = p_{\varphi^{-1}(\Gamma,\gamma)}(X_o, R)$, for all $(\Gamma, \gamma) \in \Xi$. Additionally, such $\phi$ is decoupled, i.e., $\phi(\theta,\lambda) = (\phi_\theta(\theta), \phi_\lambda(\lambda))$.

Proof:

**Case 1 (connections among** $X$**):** Suppose the ground truth data generating process $p_D(X, R) = \tilde{p}_{T^*, \gamma^*}(X_O, X_u, R)$ is given by Figure [] (i). That is, $p_D(X, R) = \tilde{p}_\gamma(X|R) \int_Z \prod_i \tilde{p}_{T_i}(X_i|Z, pa(X_i) \bigcap X) p(Z) dZ$. Without loss of generality, assume that probabilistic distributions $\tilde{p}_{T_i}(X_i|Z, pa(X_i) \bigcap X)$ takes the form as $\tilde{p}_{T_i}(X_i|Z, pa(X_i) \bigcap X) = \int_{\epsilon_i} \delta(X_i - f_i^{\lambda_i}(\epsilon_i, pa(X_i) \bigcap X, Z)) p(\epsilon_i) d\epsilon_i$. Therefore, we have

$$\tilde{p}_\gamma(X)$$

$$= \int_Z \prod_i \tilde{p}_{T_i}(X_i|Z, pa(X_i) \bigcap X) p(Z) dZ$$

$$= \int_Z \left[ \prod_{\{i|N(X_i) \bigcap X \neq \emptyset\}} \int_{\epsilon_i} d\epsilon_i \delta(X_i - f_i^{\lambda_i}(\epsilon_i, pa(X_i) \bigcap X, Z)) p(\epsilon_i) \right]$$

$$\left[ \prod_{\{j|N(X_j) \bigcap X = \emptyset\}} p(X_j|Z) \right] p(Z) dZ$$

$$= \int_{z, \{i|N(X_i) \bigcap X \neq \emptyset\}} \left[ \prod_{\{i|N(X_i) \bigcap X \neq \emptyset\}} \delta(X_i - f_i^{\lambda_i}(\epsilon_i, pa(X_i) \bigcap X, Z)) p(\epsilon_i) \right]$$

$$\left[ \prod_{\{j|N(X_j) \bigcap X = \emptyset\}} p(X_j|Z) \right] p(Z) dZ$$

Apparently, there exists a set of function $\{g_i(\cdot)|N(X_i) \bigcap X \neq \emptyset\}$, such that:

$$\int_{z, \{i|N(X_i) \bigcap X \neq \emptyset\}} \left[ \prod_{\{i|N(X_i) \bigcap X \neq \emptyset\}} \delta(X_i - f_i^{\lambda_i}(\epsilon_i, pa(X_i) \bigcap X, Z)) p(\epsilon_i) \right]$$

$$\left[ \prod_{\{j|N(X_j) \bigcap X = \emptyset\}} p(X_j|Z) \right] p(Z) dZ$$

$$= \int_{z, \{i|N(X_i) \bigcap X \neq \emptyset\}} \left[ \prod_{\{i|N(X_i) \bigcap X \neq \emptyset\}} \delta(X_i - g_i(\epsilon_i, anc_\epsilon(i), Z)) p(\epsilon_i) \right]$$

$$\left[ \prod_{\{j|N(X_j) \bigcap X = \emptyset\}} p(X_j|Z) \right] p(Z) dZ$$

Where $anc_\epsilon(i)$ is the shorthand for

$$\{\epsilon_k | X_k \in anc X_i \bigcap Z, 1 \leq k \leq D\}$$

Note that, the graphical model of the new parameterization,

$$p(X) = \int_{z, \{i|N(X_i) \bigcap X \neq \emptyset\}} \left[ \prod_{\{i|N(X_i) \bigcap X \neq \emptyset\}} \delta(X_i - g_i(\epsilon_i, anc_\epsilon(i), Z)) p(\epsilon_i) \right]$$

$$\left[ \prod_{\{j|N(X_j) \bigcap X = \emptyset\}} p(X_j|Z) \right] p(Z) dZ$$

has a new aggregated latent space, $\{Z, \{\in_i | 1 \leq i \leq D\}\}$. That is, for each $X_n$ (notated as $X_i$ in the above) that has non empty neighbour in $X$, a new latent variable will be created. With this new latent space, the connections among $X$ can be decoupled, and the new graphical structure of p(X, R) corresponds to Figure 5 (h). The mapping $\phi$ that connects $\widetilde{p_{\Gamma_i}}(X, R)$ and p(X, R) can now be defined as identity mapping, since no new parameters are introduced/removed when reparameterizing $\widetilde{p_{\Gamma_i}}(X, R)$ and p(X, R). Hence, the two requirements of Lemma 1 are fulfilled. Note that in the below, subscript i is used in place of subscript n.

**Case 2(subgraph):** Next, consider the case that the ground truth data generating process $p_D(X, R) = \bar{p}_{\tau^*, \gamma^*}(X_o, X_u, R)$ is given by one of the Figure 1 (a)-(g). That is, it is a subgraph of Figure 5 (h). Without loss of generality, assume that $\bar{p}_{\gamma_i}(R_i = 1 | pa(R_i)) = \text{logit}^{-1}(f_{\gamma_i}(pa(R_i)))$, and $pa(R_i) \subsetneq \{X, Z\}$; in other words, certain connections from $\{X, Z\}$ to $R_i$ is missing. Consider the model distribution parameterized by $p(R_i = 1 | X, Z) = \text{logit}^{-1}(f_{\gamma_i}(pa(R_i)) + g_{\theta_i}(\{X, Z\} \setminus pa(R_i)))$, satisfying $g_{\theta_i = 0}(\cdot) \equiv 0$. Therefore, the mapping $\Phi^{-1}$ is given as $\Phi^{-1}(\gamma_i) := (\gamma_i, \theta_i = 0)$. Apparently, $\Phi^{-1}$ is injective, hence satisfying the requirement of Proposition 2

**Proposition 3** (Sufficient conditions for identifiability under MNAR and data-model mismatch). *Let $p_{\theta, \lambda}(X_o, X_u, R)$ be a model on the observable variables $X$ and missing pattern $R$, and $p_D(X_o, X_u, R)$ be the ground truth distribution. Assume that they satisfies **Data setting D2**, **Assumption A2, A3, and A4**. Let $\Theta = \arg\max_{(\theta, \lambda) \in \Omega} E_{(x_o, r) \sim p_D(X_o, R)} \log p_{(\theta, \lambda)}(X_o = x_o, R = r)$ be the set of ML solutions of Equation 1. Then, we have $\Theta = \{\Phi_\tau^{-1}(\tau^*)\} \times \Theta_\lambda$. Namely, the ground truth model parameter $\tau^*$ of $p_D$ can be uniquely identified (as $\Phi(\theta^*)$) via ML learning.*

**Proof** : First, it s not hard to show that $p_{\theta, \lambda}(X_{O_l'}, R)$ is partially identifiable on $\{\theta_d\}_{d \in O_l'}$ for $\forall O_l' \in \bar{A}_\mathcal{I}$. This has been shown in the proof of Proposition 1, and we will not repeat this proof again.

Next, given data setting **D2** and **Assumption A4**, define

$$\Theta_{ML} = \arg\max_{(\theta, \lambda) \in \Omega} E_{(x_o, r) \sim p_D(X_o, R)} \log p_{(\theta, \lambda)}(X_o = x_o, R = r)$$

, then we have:

$$p_{(\theta_{ML}, \lambda_{ML})}(X_o, R) = p_{\Phi^{-1}(\tau^*, \gamma^*)}(X_o, R)$$

holds for all $(\theta_{ML}, \lambda_{ML}) \in \Theta_{ML}$, and all $\forall O \subset \mathcal{I}$ that satisfies $p(X_o, X_u, R_o = 1, R_u = 0) > 0$.

Since $p_{(\theta, \lambda)}(X_{O_l'}, R)$ are partially identifiable on $\{\theta_d\}_{d \in O_l'}$ for $\forall O_l' \subset \bar{A}_\mathcal{I}$ and according to **Assumption A3**, $p_D(X_o, X_u, R_{O_l'} = 1, R_{\mathcal{I} \setminus O_l'} = 0) > 0$. Therefore,

$$\{\theta_d = \Phi_\theta^{-1}(\tau^*, \gamma^*)_d\}_{d \in O_l'}$$

must be true for all $\forall O_l' \subset \bar{A}_\mathcal{I}$, where $\Phi_\theta^{-1}(\tau^*, \gamma^*)$ denotes the components of $\Phi^{-1}(\tau^*, \gamma^*)$ that corresponds to the entries of $\theta$. Since we have assumed that $\bigcup_{O_l' \in \bar{A}_\mathcal{I}} X_{O_l'} = \mathcal{I}$ in **Assumption 3** (i.e., $\bar{A}_\mathcal{I}$ is a cover of $\mathcal{I}$ ), this guarantees that

$$\theta_d^{ML} = \Phi_\theta^{-1}(\tau^*, \gamma^*)_d$$

for all $d$. In other words, we are able to uniquely identify $\theta^*$ from observed data, therefore

$$\Theta = \{\Phi_\theta^{-1}(\tau^*, \gamma^*)\} \times \Theta_\lambda$$

.

Finally, according to **Assumption 4** and the proof of Lemma 1, $\Phi$ is decoupled as $(\Phi_\theta(\theta), \Phi_\lambda(\lambda))$. Therefore, we can write $\Theta = \{\Phi^{-1}(\tau^*)\} \times \Theta_\lambda$. That is, the ground truth model parameter $\tau^*$ of $p_D$ can be uniquely identified (as $\Phi(\theta^*)$).

## Appendix F Identifiability based on equivalence classes

In this section, we introduce the notion of identifiability based on equivalence classes. Let~ be a equivalence relation on a parameter space $\Omega$. That is, it satisfies reflexivity ($\theta_1 \sim \theta_2$), symmetry (($\theta_1 \sim \theta_2$) if and only if ($\theta_2 \sim \theta_1$), and transitivity (if $\theta_1 \sim \theta_2$ and $\theta_2 \sim \theta_3$, then $\theta_1 \sim \theta_3$).

Then, a equivalence class of $\theta_1 \in \Omega$ is defined as $\{\theta | \theta \in \Omega, \theta \sim \theta\}$. We denote this by $[\theta^1]$. Then, we are able to give the definition of model identifiability based on equivalence classes:

**Definition F.1** (Model identifiability based on equivalence relation). Assume $p_\theta(X)$ is a distribution of some random variable X, $\theta$ is its parameter that takes values in some parameter space $\Omega_\theta$, and sim some equivalence relation on $\Omega$. Then, if $p_\theta(X)$ satisfies $p_{\theta 1}(X) = p_{\theta 2}(X) \Leftrightarrow \theta_1 \sim \theta_2 \Leftrightarrow [\theta_1] \sim [\theta_2]$, $\forall \theta_1, \theta_2 \in \Omega$ we say that $p_\theta$ is identifiable w.r.t. $\theta$ on $\Omega_\theta$.

Apparently, definition 2.1 is a special case of definition F.1, where ~ is given by the equality operator, =. When the discussion is based on the identifiability under equivalence relation, then it is obvious that all the arguments of Proposition 1, 2, and 3 still holds. Also, the statement of the results needs to adjusted accordingly. For example, in Proposition 1, instead of "the ground truth model parameter $\theta^*$ can be uniquely identified", we now have "the ground truth model parameter $\theta$ can be uniquely identified up to a equivalence relation, ~".

## Appendix G Subset identifiability (A2) for identifiable VAEs

The GINA model needs satisfy the requirement on model of Proposition 1 or 3, if we wish to use it to fit to the partially observed data and then perform (unbiased) missing data imputation. In order to show that the identifiability result of Proposition 1/3 can be applied to GINA, the key assumption that we need to verify is the local identifiability (Assumption A2). To begin with, in [Ilyes Khemakhem, Diederik Kingma, Ricardo Monti, and Aapo Hyvarinen. Variational autoencoders and nonlinear ica: A unifying framework. In International Conference on Artificial Intelligence and Statistics, pages 2207-2217. PMLR, 2020], the following theorem on VAE identifiability has been proved:

**Theorem 1.** *Assume we sample data from the model given by* $p(X, Z|U) = p_\epsilon(X - f(Z)) p_{T,\zeta}(Z|U)$, *where* $f$ *is a multivariate function* $f : \mathbb{R}^H \mapsto \mathbb{R}^D$. $p_{T,\zeta}(Z|U)$ *is parameterized by exponential family of the form* $p_{T,\zeta}(Z|U) \propto \prod_{i=1}^{M} Q(Z_i) \exp[\sum_{j=1}^{K} T_{i,j}(Z_i)\zeta_{i,j}(U)]$, *where* $Q(Z_i)$ *is some base measure,* $M$ *is the dimensionality of the latent variable* $Z$, $\mathbf{T}_i(U) = (T_{i,1}, ..., T_{i,K})$ *are the sufficient statistics, and* $\mathbf{m}\zeta_i(U) = (\zeta_{i,1}, ..., \zeta_{i,K})$ *are the corresponding parameters, depending on* $U$. *Assume the following holds:*

1. *The set* $\{X \in \mathcal{X} | \phi_\epsilon(x) = 0\}$ *has zero measure, where* $\phi$ *is the characteristic function of* $p_\epsilon$;

2. *The multivariate function* $f$ *is injective;*

3. $T_{i,j}$ *are differentiable a.e., and* $(T_{i,j})_{1 \le j \le k}$ *are linearly independent on any subset of* $\mathcal{X}$ *of measure greater than zero;*

4. *There exists* $nk + 1$ *distinct points* $U^0, ..., U^{nk}$, *such that the matrix* $L = (\mathbf{m}\zeta(U^1 - U^0), ..., \mathbf{m}\zeta(U^{nk} - U^0))$ *of size* $nk$ *by* $nk$ *is invertible.*

*Then, the parameters* $(f, T, \zeta)$ *are* $\sim_A$*-identifiable, where* $\sim_A$ *is the equivalence class defined as (see also Appendix [F]):*

$$(f, T, \zeta) \sim (\bar{f}, \bar{T}, \bar{\zeta}) \iff \exists \mathbf{A}, \mathbf{c} | \mathbf{T}(f^{-1}(X)) = \mathbf{A}\mathbf{T}(\bar{f}^{-1}(X)) + \mathbf{c}$$

. *Here,* $\mathbf{A}$ *is a* $nk$ *by* $nk$ *matrix, and* $\mathbf{c}$ *is a vector.*

Note that under additional mild assumptions, the A in the $\sim_A$ equivalence relation can be further reduced to a permutation matrix. That is, the model parameters can be identified, such that the latent variables differs up to a permutation. This is not inconsequential in many applications. We refer to [Ilyes Khemakhem, Diederik Kingma, Ricardo Monti, and Aapo Hyvarinen. Variational autoencoders and nonlinear ica: A unifying framework. In International Conference on Artificial Intelligence and Statistics, pages 2207-2217. PMLR, 2020] for more discussions on permutation equivalence.

So far, Theorem 1 only discussed the identifiability of p(X) on the full variables, X = $X_o$ U $X_u$. However, in Assumption A2, we need the reference model to be (partially) identifiable on a partition $O_s \in A_l$, $p_\theta(X_{Os})$. Naturally, we need additional assumptions on the injective function f, as stated below:

**Assumption A5** There exists an integer $D_o$, such that fo : $\mathbb{R}^H \mapsto \mathbb{R}^{|O|}$ is injective for all O that $|O| \ge D_0$. Here, $f_O$ is the entries from the output of f, that corresponds to the index set O.

**Remark** Note that, under assumption A5, the Assumption A3 in Section 3 becomes more intuitive: it means that in order to uniquely recover the ground truth parameters, our training data must contain training examples that have more than D0 observed features. This is different from some previous works, where complete case data must be available.

Finally, given these new assumptions, it is easy to show that:

**Corollary 1** (Local identifiability). *Assume that $p(X, Z|U) = p_\varepsilon(X - f(Z))p_{T,\zeta}(Z|U)$ is the model parameterized according to Theorem 1. Assume that the assumptions in Theorem 1 holds for $p(X|U)$. Additionally, assume that $f$ satisfies assumption A5.*

*Then, consider the subset of variables, $X_o$. Then, $p(X_o|U)$ is $\sim_A$-identifiable on $(f_O, T, \zeta)$ for all $O$ that satisfies $|O| \geq D_0$, where $f_O$ is the entries from the output of $f$, that corresponds to the index set $O$.*

**Proof** : it is trivial to see that the assumptions 1, 3, and 4 in Theorem 1 automatically holds regarding $p(X_o|U)$. $f_O$ is injective according to Assumption **A5**. Hence, $p(X_o|U)$ satisfies all the assumptions in Theorem 1 and $p(X_o|U)$ is $\sim_A$-identifiable on $(f_O, T, \zeta)$ for all $O$ that satisfies $|O| \geq D_0$. □

**Remark** In practice, **Assumption A5** is often satisfied. For example, consider the $f$ that is parameterized by the following MLP composite function:

$$f(Z) = h(W \circ g(Z)) \tag{4}$$

, where $g$ is a $D_0$ dimensional, injective multivariate function $g : \mathbb{R}^H \mapsto \mathbb{R}^{D_0}$, $h$ is some activation function $h : \mathbb{R} \mapsto \mathbb{R}$, and $W$ is a injective linear mapping $W : \mathbb{R}^{D_0} \mapsto \mathbb{R}^D$ represented by the matrix $W_{D_0 \times D}$, whose submatrices that consists of $|O| \geq D_0$ arbitrary selected columns are also injective. Note that this assumption for $W$ is not hard to fulfill: a randomly generated matrix (e.g., with element-wise i.i.d. Gaussian prior) satisfies this condition with probability 1. To verify $f_O$ is injective for all $|O| \geq D_0$, notice that $f_O(Z) = h(W_O \circ g(Z))$, where $W_O$ is the output dimensions of $W$ that corresponds to the index set $O$. Since $W$ is injective and $|O| \geq D_0$, we have that $W_O$ is also injective, hence $f_O$ is also injective.

**Appendix H Active question selection**

Suppose $X_o$ be the set of observed variables, that represents the correctness of student's response to questions that are presented to them. Then, in the problem of active question selection, we start with $O = \emptyset$, and we would like to decide which variable $X_n$ from $X_U$ to observe/query next, so that it will most likely provide the most valuable information for some target variable of interest, $X_\phi$; Meanwhile, we should while make as few queries as possible. Once we have decided which $X_n$ to observed next, we will make query and add n (i) to O. This process is done by maximizing the information reward proposed by [Chao Ma, Sebastian Tschiatschek, Konstantina Palla, Jose Miguel Hernandez-Lobato, Sebastian Nowozin, and Cheng Zhang. Eddi: Efficient dynamic discovery of high-value information with partial vae. arXiv preprint arXiv:1809.11142, 2018]:

$$i^* = \arg\max_{i \in U} R(i \mid X_O) := \mathbb{E}_{X_i \sim p(X_i|X_O)} \mathbb{KL}\left[p(X_\phi|X_i, X_O) \,\|\, p(X_\phi|X_O)\right].$$

In the Eedi dataset, as we do not have a specific target variable of interest, it is defined as $X_\phi = X_U$. In this case, $X_\phi$ could be ver high-dimensional, and direct estimation of $\mathrm{KL}[p(X_\phi|X_i, X_O)\|p(X_\phi|X_O)]$. could be inefficient.

In [Chao Ma, Sebastian Tschiatschek, Konstantina Palla, Jose Miguel Hernández-Lobato, Sebastian Nowozin, and Cheng Zhang. Eddi: Efficient dynamic discovery of high-value information with partial vae. arXiv preprint arXiv:1809.11142, 2018], a fast approximation has been proposed:

$$\begin{aligned}
R(i \mid X_o) =&\, \mathbb{E}_{X_i \sim p(X_i|X_o)} D_{KL}\left[p(Z|X_i, X_o)\|p(Z|X_o)\right] - \\
&\, \mathbb{E}_{X_\phi, X_i \sim p(X_\phi, X_i|X_o)} D_{KL}\left[p(Z|X_\phi, X_i, X_o)\|p(Z|X_\phi, X_o)\right]. \\
\approx&\, \mathbb{E}_{X_i \sim \hat{p}(X_i|X_o)} D_{KL}\left[q(Z|X_i, X_o)\|q(Z|X_o)\right] - \\
&\, \mathbb{E}_{X_\phi, X_i \sim \hat{p}(X_\phi, X_i|X_o)} D_{KL}\left[q(Z|X_\phi, X_i, X_o)\|q(Z|X_\phi, X_o)\right].
\end{aligned}$$

In this approximation, all calculation happens in the latent space of the model, hence we can make use of the learned inference net to efficiently estimate $R(i|X_o)$ (or $R(n|X_o)$ according to the notation used further above).

**Appendix I Additional Results**

**Imputation results for synthetic datasets**

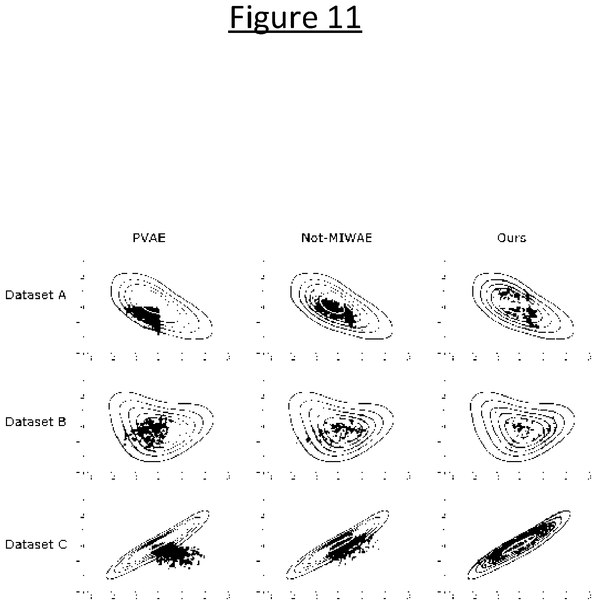

In addition to the data generation samples visualized in Figure 3, we present the imputation results for synthetic datasets in Figure 4. The procedure of generating the imputed samples are as follows. First, each model are trained on the randomly generated, partially observed synthetic dataset described above. Once the models are trained, they are used to impute the missing data in the training set. For each training data, we draw exactly one sample from the (approximate) conditional distribution $p_t$heta$(X_u|X_o)$. Thus, we have "complete" version of the training set, one for each different model. Finally, we draw the scatter plot for each imputed training set, per dataset and per model. If the model is doing a good job recovering the ground truth distribution $p_D(X)$ from training set, then its scatter plot should be close to the KDE estimate of the ground truth density of complete data. According to Figure 11, the imputed distribution is similar to the generated distribution in Figure 10.

Figure 11 shows a visualization of imputed X2 and X3 from synthetic experiment. Row-wise (A-C) plots for dataset A, B, and C, respectively; Column-wise: PVAE imputed samples, Not-MIWAE imputed samples, and GINA imputed samples, respectively. Contour plot: kernel density estimate of ground truth density of complete data.

More generally, according to one aspect disclosed herein, there is provided a computer-implemented method, the method comprising: receiving values of a plurality of features for each data point in a set of data, the set of data comprising at least one missing value of a feature for at least one data point; using a first neural network having a first set of parameters to encode the set of data into a distribution of a first plurality of latent vectors; using a second neural network having a second set of parameters to decode a random sample of the distribution of the first plurality of latent vectors into a computed vector for each data point; inputting the computed vector for each data point into a third neural network having a third set of parameters to determine a computed set of mask vectors comprising a computed mask vector for each data point, wherein each computed mask vector comprises a computed binary value for each feature to indicate whether a value for each feature is missing or not; using a fourth neural network having a fourth set of parameters to encode background data for each data point into a distribution of a second plurality of latent vectors; tuning the first, second and third set of parameters by minimising a loss function, the loss function comprising a sum of: a measure of difference between the distribution of the first plurality of latent vectors and the distribution of the second plurality of latent vectors; and an error determined based on the set of computed vectors, the set of computed mask vectors and ground truth data for the set of data.

According to some embodiments, the background data comprises fully observed data for one or more of the plurality of features of each data point.

According to some embodiments, the set of data is determined by removing, from the ground truth data, values for one or more of the plurality of features outside of a range of values for each of the one or more features.

According to some embodiments, the set of data comprises: one or more observed values for one or more of the data points; and a mask vector for each data point, where each mask vector comprises a binary value for each feature to indicate whether a value for each feature is missing or not.

According to some embodiments, the mask vector for each data point in the set of data is inferred from the one or more observed values and the at least one missing value of a feature.

According to some embodiments, after the tuning the first, second and third set of parameters, the method comprises: setting the first and second set of parameters to tuned values to provide a tuned first set of parameters and a tuned second set of parameters; receiving a second set of data comprising at least one missing value of the features for at least one data point in the second set of data; using the first neural network having the tuned first set of parameters to encode the set of data into a distribution of a third plurality of latent vectors; sampling a random sample of latent vectors from the distribution of the third plurality of latent vectors; using the second neural network having the tuned second set of parameters to decode the random sample of latent vectors from the distribution of the third plurality of latent vectors to obtain the at least one missing value of the features for the at least one data point in the second set of data the background data is input by a user.

According to some embodiments, the tuning the first, second and third set of parameters by minimising a loss function comprises using a gradient descent algorithm for each of the first, second and third set of parameters.

According to some embodiments, the at least one missing value of a feature for at least one data point in the set of data comprises Missing Not At Random, MNAR, data.

According to some embodiments, the set of data comprises one or more data values representing sensor values of one or more devices.

According to some embodiments, the method is used to diagnose one or more malfunctions in the one or more devices.

According to some embodiments, the set of data comprises one or more data values representing physical measurements of one or more patients.

According to some embodiments, the method is used to diagnose the one or more patients.

According to some embodiments, the background data comprises an age and a gender of each patient.

According to another aspect, there is provided a computer program embodied on computer-readable storage, the program comprising code configured so as when run on one or more processors to perform the operations of any preceding claim.

Other variants and applications of the disclosed techniques may become apparent to a skilled person once given the disclosure herein. The scope of the present disclosure is not limited by the described embodiments but only by the accompanying claims.

Other variants and applications of the disclosed techniques may become apparent to a skilled person once given the disclosure herein. The scope of the present disclosure is not limited by the described embodiments but only by the accompanying claims.

**Claims**

1. A computer-implemented method comprising:

   receiving values of a plurality of features for each data point in a set of data, the set of data comprising at least one missing value of a feature for at least one data point;
   using a first neural network having a first set of parameters to encode the set of data into a distribution of a first plurality of latent vectors;
   using a second neural network having a second set of parameters to decode a random sample of the distribution of the first plurality of latent vectors into a computed vector for each data point;
   inputting the computed vector for each data point into a third neural network having a third set of parameters to determine a computed set of mask vectors comprising a computed mask vector for each data point, wherein each computed mask vector comprises a computed binary value for each feature to indicate whether a value for each feature is missing or not;
   using a fourth neural network having a fourth set of parameters to encode background data for each data point into a distribution of a second plurality of latent vectors;
   tuning the first, second and third set of parameters by minimising a loss function, the loss function comprising a sum of:

      a measure of difference between the distribution of the first plurality of latent vectors and the distribution of the second plurality of latent vectors; and
      an error determined based on the set of computed vectors, the set of computed mask vectors and ground truth data for the set of data.

2. The method of claim 1, wherein the background data comprises fully observed data for one or more of the plurality of features of each data point.

3. A method according to claim 1 or claim 2, wherein the set of data is determined by removing, from the ground truth data, values for one or more of the plurality of features outside of a range of values for each of the one or more features.

4. A method according to any preceding claim, wherein the set of data comprises:

   one or more observed values for one or more of the data points; and
   a mask vector for each data point, where each mask vector comprises a binary value for each feature to indicate whether a value for each feature is missing or not.

5. A method according to claim 4, wherein the mask vector for each data point in the set of data is inferred from the one or more observed values and the at least one missing value of a feature.

6. A method according to any preceding claim, comprising:

   after the tuning the first, second and third set of parameters, setting the first and second set of parameters to tuned values to provide a tuned first set of parameters and a tuned second set of parameters;
   receiving a second set of data comprising at least one missing value of the features for at least one data point in the second set of data;

using the first neural network having the tuned first set of parameters to encode the set of data into a distribution of a third plurality of latent vectors;

sampling a random sample of latent vectors from the distribution of the third plurality of latent vectors;

using the second neural network having the tuned second set of parameters to decode the random sample of latent vectors from the distribution of the third plurality of latent vectors to obtain the at least one missing value of the features for the at least one data point in the second set of data.

7. A method according to any preceding claim, wherein the background data is input by a user.

8. A method according to any preceding claim, wherein the tuning the first, second and third set of parameters by minimising a loss function comprises using a gradient descent algorithm for each of the first, second and third set of parameters.

9. A method according to any preceding claim, wherein the at least one missing value of a feature for at least one data point in the set of data comprises Missing Not At Random, MNAR, data.

10. A method according to any preceding claim, wherein the set of data comprises one or more data values representing sensor values of one or more devices.

11. A method according to claim 10, wherein the method is used to diagnose one or more malfunctions in the one or more devices.

12. A method according to any preceding claim, wherein the set of data comprises one or more data values representing physical measurements of one or more patients.

13. A method according to claim 12, wherein the method is used to diagnose the one or more patients.

14. A method according to claim 12 and 13, wherein the background data comprises an age and a gender of each patient.

15. A computer program embodied on computer-readable storage, the program comprising code configured so as when run on one or more processors to perform the operations of any preceding claim.

# Figure 1(a)

# Figure 1(b)

# Figure 1(c)

Input vector X

108

Deep neural network

Classification Y

# Figure 2

200

206

Machine learning algorithm

ML model

208

Controller

202

Interface

204

# Figure 3

# Figure 4

208

208q
(inference
network, i.e.
encoder)

208p
(generative
network, i.e.
decoder)

# Figure 5

# Figure 6

# Figure 7

# Figure 8

# Figure 9

930

938a

942

NN1
Encoder
(φ)

934

944

NN2
Decoder
(θ)

| R
X_O |

Z

$\widehat{X}_O$
$\widehat{X}_U$

936a

936c

# Figure 10

# Figure 11

1200

## Figure 12

1201

Receiving values of a plurality of features for each data point in a set of data, the set of data comprising at least one missing value of a feature for at least one data point

1202

Using a first neural network having a first set of parameters to encode the set of data into a distribution of a first plurality of latent vectors

1203

Using a second neural network having a second set of parameters to decode a random sample of the distribution of the first plurality of latent vectors into a computed vector for each data point

1204

Inputting the computed vector for each data point into a third neural network having a third set of parameters to determine a computed set of mask vectors comprising a computed mask vector for each data point, wherein each computed mask vector comprises a computed binary value for each feature to indicate whether a value for each feature is missing or not

1205

Using a fourth neural network having a fourth set of parameters to encode background data for each data point into a distribution of a second plurality of latent vectors

1206

Tuning the first, second and third set of parameters by minimising a loss function, the loss function comprising a sum of: a measure of difference between the distribution of the first plurality of latent vectors and the distribution of the second plurality of latent vectors; and an error determined based on the set of computed vectors, the set of computed mask vectors and ground truth data for the set of data

**EP 4 134 871 A1**

Europäisches Patentamt
European Patent Office
Office européen des brevets

# EUROPEAN SEARCH REPORT

Application Number

EP 21 19 1394

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/372369 A1 (GONG YU [CA] ET AL) 26 November 2020 (2020-11-26) * abstract; figures 1, 3 * * paragraph [0002] - paragraph [0013] * * paragraph [0054] - paragraph [0157] * | 1-15 | INV. G06N3/04 G06N3/08 |
| X | YU GONG ET AL: "Variational Selective Autoencoder: Learning from Partially-Observed Heterogeneous Data", ARXIV.ORG, CORNELL UNIVERSITY LIBRARY, 201 OLIN LIBRARY CORNELL UNIVERSITY ITHACA, NY 14853, 25 February 2021 (2021-02-25), XP081892096, * abstract; figure 1 * * sections 1-4 * | 1-15 | |
| A | OLEG IVANOV ET AL: "Variational Autoencoder with Arbitrary Conditioning", ARXIV.ORG, CORNELL UNIVERSITY LIBRARY, 201 OLIN LIBRARY CORNELL UNIVERSITY ITHACA, NY 14853, 6 June 2018 (2018-06-06), XP081380176, * abstract; figure 5 * * sections 3-5 * | 1-15 | TECHNICAL FIELDS SEARCHED (IPC) G06N |
| A | GRAZIANO MITA ET AL: "An Identifiable Double VAE For Disentangled Representations", ARXIV.ORG, CORNELL UNIVERSITY LIBRARY, 201 OLIN LIBRARY CORNELL UNIVERSITY ITHACA, NY 14853, 10 February 2021 (2021-02-10), XP081877098, * abstract * * sections 2-4 * | 1-15 | |

The present search report has been drawn up for all claims

| Place of search | Date of completion of the search | Examiner |
|---|---|---|
| Munich | 5 April 2022 | Kopilovic, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

42

## ANNEX TO THE EUROPEAN SEARCH REPORT
## ON EUROPEAN PATENT APPLICATION NO.

EP 21 19 1394

This annex lists the patent family members relating to the patent documents cited in the above-mentioned European search report.
The members are as contained in the European Patent Office EDP file on
The European Patent Office is in no way liable for these particulars which are merely given for the purpose of information.

05-04-2022

| Patent document cited in search report | | Publication date | Patent family member(s) | | Publication date |
|---|---|---|---|---|---|
| US 2020372369 | A1 | 26-11-2020 | CA | 3081168 A1 | 22-11-2020 |
| | | | US | 2020372369 A1 | 26-11-2020 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NIELS BRUUN IPSEN ; PIERRE-ALEXANDRE MATTEI ; JES FRELLSEN.** Deep generative modelling with missing not at random data. *arXiv:2006.12871,* 2020
- **WANG MIAO ; PENG DING ; ZHI GENG.** Identifiability of normal and normal mixture models with nonignorable missing data. *Journal of the American Statistical Association,* 2016, vol. 111 (516), 1673-1683
- **DAWEN LIANG ; LAURENT CHARLIN ; JAMES MCLNERNEY ; DAVID M BLEI.** Modeling user exposure in recommendation. *Proceedings of the 25th international conference on World Wide Web,* 2016, 951-961
- **THOMAS J ROTHENBERG.** Identification in parametric models. *Econometrica: Journal of the Econometric Society,* 1971, 577-591
- **DONALD B RUBIN.** Inference and missing data. *Biometrika,* 1976, vol. 63 (3), 581-592
- **ARTHUR P DEMPSTER ; NAN M LAIRD ; DONALD B RUBIN.** Maximum likelihood from incomplete data via the em algorithm. *Journal of the Royal Statistical Society: Series B (Methodological),* 1977, vol. 39 (1), 1-22
- **RODERICK JA LITTLE ; DONALD B RUBIN.** Statistical analysis with missing data. John Wiley & Sons, 2019, vol. 793
- **AUDE SPORTISSE ; CLAIRE BOYER ; JULIE JOSSE.** Imputation and low-rank estimation with missing not at random data. *Statistics and Computing,* 2020, vol. 30 (6), 1629-1643
- **JOSEPH G IBRAHIM ; STUART R LIPSITZ ; M-H CHEN.** Missing covariates in generalized linear models when the missing data mechanism is non-ignorable. *Journal of the Royal Statistical Society: Series B (Statistical Methodology),* 1999, vol. 61 (1), 173-190
- Probabilistic matrix factorization with non-random missing data. **JOSE MIGUEL HERNANDEZ-LOBATO ; NEIL HOULSBY ; ZOUBIN GHAHRAMANI.** International Conference on Machine Learning. PMLR, 2014, 1512-1520
- **BENJAMIN M MARLIN ; RICHARD S ZEMEL.** Collaborative prediction and ranking with nonrandom missing data. *Proceedings of the third ACM conference on Recommender systems,* 2009, 5-12

- Doubly robust joint learning for recommendation on data missing not at random. **XIAOJIE WANG ; RUI ZHANG ; YU SUN ; JIANZHONG QI.** International Conference on Machine Learning. PMLR, 2019, 6638-6647
- **GUANG LING ; HAIQIN YANG ; MICHAEL R LYU ; IRWIN KING.** Response aware model-based collaborative filtering. *arXiv:1210.4869,* 2012
- **YIXIN WANG ; DAVID M. BLEI.** *The blessings of multiple causes,* 2019
- **YIXIN WANG ; DAWEN LIANG ; LAURENT CHARLIN ; DAVID M BLEI.** The deconfounded recommender: A causal inference approach to recommendation. *arXiv:1808.06581,* 2018
- **DAWEN LIANG ; LAURENT CHARLIN ; DAVID M BLEI.** *Causal inference for recommendation*
- **TOBIAS SCHNABEL ; ADITH SWAMINATHAN ; ASHUDEEP SINGH ; NAVIN CHANDAK ; THORSTEN JOACHIMS.** Recommendations as treatments: Debiasing learning and evaluation. *arXiv:1602.05352,* 2016
- **WEI MA ; GEORGE H CHEN.** Missing not at random in matrix completion: The effectiveness of estimating missingness probabilities under a low nuclear norm assumption. *arXiv:1910.12774,* 2019
- **SHENG WANG ; JUN SHAO ; JAE KWANG KIM.** An instrumental variable approach for identification and estimation with nonignorable nonresponse. *Statistica Sinica,* 2014, 1097-1116
- **WANG MIAO ; PENG DING ; ZHI GENG.** Identifiability of normal and normal mixture models with nonignorable missing data. *Journal of the American Statistical Association,* 2016, vol. 111 (516
- **WANG MIAO ; LAN LIU ; ERIC TCHETGEN TCHETGEN ; ZHI GENG.** Identification, doubly robust estimation, and semiparametric efficiency theory of nonignorable missing data with a shadow variable. *arXiv:1509.02556,* 2015
- **KARTHIKA MOHAN ; JUDEA PEARL ; JIN TIAN.** Graphical models for inference with missing data. *Advances in neural information processing systems,* 2013, vol. 26, 1277-1285
- **ANDRIY MNIH ; RUSS R SALAKHUTDINOV.** Probabilistic matrix factorization. *Advances in neural information processing systems,* 2007, vol. 20, 1257-1264

- **SUVASH SEDHAIN ; ADITYA KRISHNA MENON ; SCOTT SANNER ; LEXING XIE.** Autorec: Autoencoders meet collaborative filtering. *Proceedings of the 24th international conference on World Wide Web,* 2015, 111-112
- **ZICHAO WANG ; ANGUS LAMB ; EVGENY SAVELIEV ; PASHMINA CAMERON ; YORDAN ZAYKOV ; JOSE MIGUEL HERNANDEZ-LOBATO ; RICHARD E TURNER ; RICHARD G BARANIUK ; CRAIG BARTON ; SIMON PEYTON JONES.** Diagnostic questions: The neurips 2020 education challenge. *arXiv:2007.12061,* 2020
- **CHAO MA ; SEBASTIAN TSCHIATSCHEK ; KONSTANTINA PALLA ; JOSE MIGUEL HERNANDEZ-LOBATO ; SEBASTIAN NOWOZIN ; CHENG ZHANG.** Eddi: Efficient dynamic discovery of high-value information with partial vae. *arXiv:1809.11142,* 2018
- **PAUL D ALLISON.** Missing data. Sage publications, 2001
- **HERBERTWMARSH.** Pairwise deletion for missing data in structural equation models: Nonpositive definite matrices, parameter estimates, goodness of fit, and adjusted sample sizes. *Structural Equation Modeling: A Multidisciplinary Journal,* 1998, vol. 5 (1), 22-36
- Cluster-based knn missing value imputation for dna microarray data. **PHIMMARIN KEERIN ; WERASAK KURUTACH ; TOSSAPON BOONGOEN.** 2012 IEEE International Conference on Systems Man, and Cybernetics (SMC). IEEE, 2012, 445-450
- **IAN R WHITE ; PATRICK ROYSTON ; ANGELA M WOOD.** Multiple imputation using chained equations: issues and guidance for practice. *Statistics in medicine,* 2011, vol. 30 (4), 377-399
- **DONALD B RUBIN.** Formalizing subjective notions about the effect of nonrespondents in sample surveys. *Journal of the American Statistical Association,* 1977, vol. 72 (359), 538-543
- **DONALD B RUBIN.** Multiple imputation for nonresponse in surveys. John Wiley & Sons, 2004, vol. 81
- **JAMES L ARBUCKLE ; GEORGE A MARCOULIDES ; RANDALL E SCHUMACKER.** Full information estimation in the presence of incomplete data. *Advanced structural equation modeling: Issues and techniques,* 1996, vol. 243, 277
- **JAMES M ROBINS ; ANDREA ROTNITZKY ; LUE PING ZHAO.** Estimation of regression coefficients when some regressors are not always observed. *Journal of the American statistical Association,* 1994, vol. 89 (427), 846-866
- **DIEDERIK P KINGMA ; MAX WELLING.** Auto-encoding variational bayes. *arXiv:1312.6114,* 2013
- **ALFREDO NAZABAL ; PABLO M OLMOS ; ZOUBIN GHAHRAMANI ; ISABEL VALERA.** Handling incomplete heterogeneous data using vaes. *Pattern Recognition,* 2020, vol. 107, 107501
- Miwae: Deep generative modelling and imputation of incomplete data sets. **PIERRE-ALEXANDRE MATTEI ; JES FRELLSEN.** International Conference on Machine Learning. PMLR, 2019, 4413-4423
- Variational autoencoders and nonlinear ica: A unifying framework. **ILYES KHEMAKHEM ; DIEDERIK KINGMA ; RICARDO MONTI ; AAPO HYVARINEN.** International Conference on Artificial Intelligence and Statistics. PMLR, 2020, 2207-2217
- **CHAO MA ; SEBASTIAN TSCHIATSCHEK ; KONSTANTINA PALLA ; JOSE MIGUEL HERNÁNDEZ-LOBATO ; SEBASTIAN NOWOZIN ; CHENG ZHANG.** Eddi: Efficient dynamic discovery of high-value information with partial vae. *arXiv:1809.11142,* 2018